(19) **Europäisches Patentamt / European Patent Office / Office européen des brevets**

(11) **EP 4 531 310 A1**

(12) **EUROPEAN PATENT APPLICATION**
published in accordance with Art. 153(4) EPC

(43) Date of publication:
02.04.2025 Bulletin 2025/14

(21) Application number: 24822837.1

(22) Date of filing: 14.06.2024

(51) International Patent Classification (IPC):
*H04B 17/21* (2015.01)

(52) Cooperative Patent Classification (CPC):
G01S 7/282; G01S 7/285; G01S 7/35; G01S 7/40;
G01S 7/41; H04B 1/00; H04B 1/04; H04B 1/16;
H04B 1/40; H04B 1/525; H04B 10/40; H04B 17/21

(86) International application number:
PCT/CN2024/099420

(87) International publication number:
WO 2024/255890 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.06.2023 CN 202310702586
31.12.2023 CN 202311873028

(71) Applicant: Calterah Semiconductor Technology
(Shanghai)
Co., Ltd.
Shanghai 201210 (CN)

(72) Inventors:
• ZHANG, Zhan
  Shanghai 201210 (CN)
• CHEN, Jiashu
  Shanghai 201210 (CN)

(74) Representative: Murgitroyd & Company
165-169 Scotland Street
Glasgow G5 8PL (GB)

(54) **CALIBRATION LINK, SIGNAL TRANSMISSION LINK, INTEGRATED CIRCUIT, ELECTROMAGNETIC WAVE DEVICE, AND APPARATUS**

(57) Provided are a calibration link, a signal transmit link, an integrated circuit, an electromagnetic wave device and an equipment. The signal transmit primary path is used for transmitting electromagnetic wave signals, wherein the calibration link is integrated in an integrated circuit including the signal transmit primary path, the calibration link is connected at least between the signal transmit primary path and an antenna corresponding to the signal transmit primary path. The calibration link is configured to calibrate the signal transmit primary path to obtain calibration information. The signal transmit primary path is configured to perform a calibration operation based on the calibration information obtained by the calibration link, wherein the calibrated signal transmit primary path transmits an electromagnetic wave signal.

FIG. 21A

**Description**

The present application claims the priority to the Chinese Patent Application No. 202310702586.5, entitled "Signal Transmission, Calibration, Compensation and Transmit And Receive Link, IQ Mixer, Integrated Circuit, Sensor And Equipment", filed on June 14, 2023, to the CNIPA, and the priority to the Chinese Patent Application No. 202311873028.1, entitled "Calibration Link, Signal Receive Link, Electromagnetic Wave Device and Integrated Circuit", filed on December 31, 2023, to the CNIPA, the content of which should be regarded as being incorporated herein by reference.

Technical Field

Embodiments of the present disclosure relate to, but are not limited to, the technical field of electromagnetic wave devices, and particularly relate to a calibration link, a signal transmit link, an integrated circuit, an electromagnetic wave device, and an equipment.

Background

In a Frequency Modulated Continuous Wave (FMCW) radar, a distance to a target can be calculated by using a frequency difference between a transmitted signal and an echo signal. The farther the distance to the target is, the greater a frequency of a corresponding intermediate frequency signal. The closer the distance to the target is, the smaller a frequency of a corresponding difference frequency signal. After receiving a plurality of successive pulse signals, distance information and radial velocity information of the target can be obtained by performing Fourier transform in fast time and slow time dimensions. In addition, multi-antenna technology can be used to measure the Direction Of Arrival (DOA) of an echo signal reflected by the target.

In order to improve the parameter estimation performance of an FMCW radar system (such as a range, a radial velocity and the DoA), it is needed to calibrate and compensate the transmit and receive link. However, traditional calibration methods cannot calibrate a radio frequency (RF) devices in real time, because a large number of peripherals need to be used, and parameters of the RF device change with a changing environment.

Summary

Embodiments of the present disclosure provide a calibration link, a signal transmit link, an integrated circuit, an electromagnetic wave device, and an equipment.

A calibration link of a primary signal transmission path is provided, wherein the primary signal transmission path is used for transmitting electromagnetic wave signals, wherein the calibration link is integrated in an integrated circuit including the primary signal transmission path, the calibration link is connected at least between the primary signal transmission path and an antenna corresponding to the primary signal transmission path. The calibration link may be configured to calibrate the primary signal transmission path to obtain calibration information. The primary signal transmission path may be configured to perform a calibration operation based on the calibration information obtained by the calibration link, wherein the calibrated primary signal transmission path transmits an electromagnetic wave signal. That is, by integrating the calibration link with the primary path, the purpose of real-time calibration can be achieved without peripherals.

For example, the calibration link calibrates the primary signal transmission path at a time of at least one of: prior to departure of the integrated circuit from manufacturing facility and/or during any interval between signal transmission and reception by the integrated circuit, and provide real-time compensation for transmitted information based on calibration data derived from a preceding calibration.

For example, the integrated circuit is provided with at least two primary signal transmission paths, wherein any calibration link may be configured to calibrate at least two of the primary signal transmission paths.

For example, the signal transmitted by the calibration link is a single-tone signal.

For example, the electromagnetic wave signal is a radar signal; the primary signal transmission path includes a primary receive path for an echo signal and/or a primary transmit path for a radio frequency signal, the calibration link correspondingly includes an auxiliary transmit link corresponding to the primary receive path and/or an auxiliary receive link corresponding to the primary transmit path, and the antenna correspondingly includes a receive antenna corresponding to the primary receive path and/or a transmit antenna corresponding to the primary transmit path; the auxiliary receive link is connected between the primary transmit path and a corresponding transmit antenna, and may be configured to calibrate a radio frequency signal transmitted by the primary transmit path, and the primary receive path includes a radio frequency unit and an intermediate frequency unit sequentially connected with the receive antenna, correspondingly, the auxiliary transmit link includes at least one of an intermediate frequency auxiliary transmit link corresponding to the intermediate frequency unit and a radio frequency auxiliary transmit link corresponding to the radio frequency unit, wherein the intermediate frequency auxiliary transmit link is connected to an intermediate frequency signal output terminal of the primary receive path, and may be configured to calibrate an intermediate frequency signal obtained by down-frequency processing an echo signal received by the primary receive path; and the radio frequency auxiliary transmit link is connected between the primary receive path and a corresponding receive antenna, and may be configured to calibrate an echo signal received by the primary receive path.

For example, the auxiliary receive link includes a first mixer, a first power amplifier, a first filtering unit and a first real digital-to-analog converter, wherein the first mixer may be configured to mix the received signal with a local oscillator signal used in the reception operation, the first power amplifier may be configured to amplify a signal output by the first mixer; the first filtering unit may be configured to perform filtering processing on the received signal to obtain a filtered signal, and the first real digital-to-analog converter may be configured to convert a digital filtered signal to an analog filtered signal.

For example, the auxiliary receive link may further include a first adder connected with the first real digital-analog converter, and the first adder may be configured to compensate a signal output by the first real digital-to-analog converter according to a leakage signal of the local oscillator signal used by the first mixer.

For example, the calibration link may further include a calibration transmit link corresponding to the auxiliary receive link, wherein the calibration transmit link may be configured to perform the calibration operation on the auxiliary receive link. Correspondingly, the auxiliary transmit link performs a calibration operation based on calibration information obtained by calibrating the receive link, wherein the calibrated auxiliary receive link performs a calibration operation on the primary transmit path.

For example, the calibration transmit link may include a first signal generator, a second real digital-to-analog converter, a second filtering unit, a second power amplifier and a second mixer, wherein the first signal generator may be configured to output a digital original signal, the second real digital-to-analog converter may be configured to convert the digital original signal to an analog original signal, the second filtering unit may be configured to perform filtering processing on the original signal to obtain a filtered signal, the second power amplifier may be configured to amplify the filtered signal to obtain an amplified signal, the second mixer may be configured to mix the amplified signal with a local oscillator signal used in a transmit operation.

For example, the calibration transmit link further includes at least one of a second adder and a Band Pass Filter. The second adder is connected between the first signal generator and the second real digital-to-analog converter, and may be configured to compensate the signal output by the first signal generator according to a leakage signal of the local oscillator signal used by the second mixer. The band-pass filter is connected with the second mixer, and may be configured to filter a signal output by the second mixer and transmit the filtered signal to the calibration unit.

For example, the intermediate frequency auxiliary transmit link may include a first signal source and a third real digital-to-analog converter, wherein the first signal source may be configured to output a digital intermediate frequency calibration signal, and the third real digital-to-analog converter may be configured to convert the digital intermediate frequency calibration signal to an analog intermediate frequency calibration signal; alternatively, the intermediate frequency auxiliary transmit link includes a fourth real digital-to-analog converter, a third mixer and a first squarer, wherein the fourth real digital-to-analog converter may be configured to convert a preset digital signal to an analog signal, the third mixer may be configured to mix the signal output from the fourth real digital-to-analog converter with the local oscillator signal to obtain a mixed signal, and the first squarer may be configured to perform square processing on the mixed signal to obtain the intermediate frequency calibration signal.

For example, the first signal source includes a second signal generator and a digital phase shift module, wherein the second signal generator is configured to generate an initial signal, and the digital phase shift module is configured to perform frequency shift and/or phase shift on the initial signal using digital quadrature modulation.

For example, the radio frequency auxiliary transmit link may also be connected to an input terminal of the intermediate frequency unit; after the intermediate frequency unit is calibrated, the radio frequency auxiliary transmit link is calibrated with the calibrated intermediate frequency unit, and the radio frequency unit is calibrated with the calibrated radio frequency auxiliary transmit link.

For example, the radio frequency auxiliary transmit link may include a second signal source, a third filtering unit, a third power amplifier and a fourth mixer, wherein the second signal source may be configured to output an original signal, the third filtering unit may be configured to perform filtering processing on the original signal to obtain a filtered signal, the third power amplifier may be configured to amplify the filtered signal to obtain an amplified signal, and the fourth mixer may be configured to mix the amplified signal with a local oscillator signal to obtain a desired signal.

For example, the radio frequency auxiliary transmit link includes at least one of a quadrature compensation unit, a second squarer and a third adder; wherein the quadrature compensation unit has a terminal connected with the second signal source and another terminal connected with the third filtering unit, and may be configured to compensate for quadrature imbalance of a received initial signal when the initial signal output by the second signal source is a quadrature signal; the second squarer is connected with a signal input terminal of the intermediate frequency unit, and may be configured to process the signal output by the fourth mixer, and to output the processed signal to the calibrated intermediate frequency unit; the third adder has a terminal connected with the second signal source and another terminal connected with the third filtering unit, and may be configured to compensate the signal output from the second signal source according to a leakage signal of the local oscillator signal used by the fourth mixer.

A signal transmit link may include a primary signal transmission path and a calibration link, wherein the primary signal transmission path may be configured to transmit an electromagnetic wave signal, and the calibration link is integrated in a device including the primary signal transmission path for calibrating the primary signal transmission path, the primary signal transmission path performs a calibration operation based on calibration information obtained by the calibration link, and the calibrated primary signal transmission path transmits the electromagnetic wave signal.

For example, the calibration link may be the above-mentioned calibration link. For example, the primary signal transmission path and the calibration link are integrated in a same chip or on a same Power Control Daughterboard (PCD) board or a same Printed circuit board (PCB) board.

An integrated circuit is provided with at least two primary signal transmission paths and the above-mentioned calibration link disposed between the two primary transmit paths, wherein the calibration link is shared by the two primary signal transmission paths.

An electromagnetic wave device may include a carrier; the integrated circuit described above, which is provided on the carrier; an antenna, which is provided on the carrier, or is integrated with the integrated circuit as an integral device provided on the carrier; the antenna includes a transmit antenna and a receive antenna; wherein the integrated circuit is connected with the antenna for transmitting electromagnetic wave signals and/or receiving electromagnetic wave signals.

A user terminal equipment may include an equipment body; and an electromagnetic wave device described above, which is disposed on the equipment body; wherein the electromagnetic wave device is used for object detection and/or wireless communication to provide reference information to an operation of the equipment body.

According to the calibration link, the signal transmit link, the integrated circuit, the electromagnetic wave device, and the equipment in the embodiments of the present disclosure, the calibration link is integrated into an integrated circuit including the primary signal transmission path, so that the calibration link can perform a calibration operation on the primary signal transmission path in real time, and the calibration operation of the calibration link will not be changed with the change of the operation environment of the primary signal transmission path, so that the primary signal transmission path can obtain more accurate calibration information, thereby improving a signal processing performance of the primary signal transmission path.

Brief Description of Drawings

FIG. 1A is a simplified schematic diagram of a signal transmit link in an analog phase shifter architecture.
FIG. 1B is a simplified schematic diagram of an analog phase shifter in the signal transmit link shown in FIG. 1A.
FIG. 2 is a schematic diagram of a structure of a signal transmit link according to an exemplary embodiment of the present disclosure.
FIG. 3 is a schematic diagram of a waveform of an FMCW transmit signal and an FMCW echo signal modulated by using a sawtooth wave.
FIG. 4 is a schematic diagram of a structure of another signal transmit link according to an exemplary embodiment of the present disclosure.
FIG. 5 is a schematic diagram of a digital phase shifter architecture in a signal transmit link according to an exemplary embodiment of the present disclosure.
FIG. 6 is a schematic diagram of a signal transmit link including a compensation unit according to an embodiment of the present disclosure.
FIG. 7 is a schematic diagram of calibrating a primary transmit path using a calibration link according to an embodiment of the present disclosure.
FIG. 8 is a schematic diagram of a structure of a signal transceiving link according to an exemplary embodiment of the present disclosure.
FIG. 9 is a schematic diagram of a structure of another signal transceiving link according to an exemplary embodiment of the present disclosure.
FIG. 10 is a schematic diagram of another transceiving link according to an embodiment of the present disclosure.
FIG. 11 is a schematic diagram of a transceiving link including a TX IQ Mod, an RX IQ De-Mod, and an LO Freq Diff according to an embodiment of the present disclosure.
FIG. 12 is a schematic diagram of a transceiving link combined with a BIST and based on the structure shown in FIG. 11 according to an embodiment of the present disclosure.
FIG. 13 is a schematic diagram of a transceiving link including a TX IQ Mod, a BIST IQ Mod, and an RX IQ De-Mod according to an embodiment of the present disclosure.

FIG. 14 is a schematic diagram of a transceiving link including an auxiliary circuit and a BIST IQ Mod according to an embodiment of the present disclosure.

FIG. 15 is a schematic diagram of another transceiving link including an auxiliary circuit and a BIST IQ Mod according to an embodiment of the present disclosure.

FIG. 16 is a schematic diagram of a structure of a mixer according to an embodiment of the present disclosure.

FIG. 17 is a schematic diagram of a structure of a compensation unit in a transmitter according to an embodiment of the present disclosure.

FIG. 18 is a schematic diagram of a digital pre-compensation HD3 architecture based on a cubic module according to an embodiment of the present disclosure.

FIG. 19 is a schematic diagram of a digital pre-compensation HD3 architecture based on a frequency multiplier waveform generator module according to an embodiment of the present disclosure.

FIG. 20 is a schematic diagram of calibration and compensation for a transmit link based on a digital phase shifter architecture according to an embodiment of the present disclosure.

FIG. 21A is a schematic diagram of a structure of a calibration link of a primary signal transmission path according to an embodiment of the present disclosure.

FIG. 21B is a schematic diagram of deployment of the calibration link shown in FIG. 21A.

FIG. 22A is a schematic diagram of a connection between a calibration link and a primary transmit path according to an embodiment of the present disclosure.

FIG. 22B is a schematic diagram of a first connection between a calibration link and a primary receive path according to an embodiment of the present disclosure.

FIG. 22C is a schematic diagram of a second connection between a calibration link and a primary receive path according to an embodiment of the present disclosure.

FIG. 23A is a schematic diagram of a structure of the auxiliary receive link in FIG. 22A.

FIG. 23B is a schematic diagram of another structure of the auxiliary receive link in FIG. 23A.

FIG. 23C is a schematic diagram of a structure of the calibration transmit link in FIG. 22A.

FIG. 23D is a schematic diagram of another structure of the calibration transmit link of FIG. 23C.

FIG. 24 is a schematic diagram of an application of a calibration link corresponding to a primary transmit path according to an embodiment of the present disclosure.

FIG. 25A is a schematic diagram of a first structure of the intermediate frequency auxiliary transmit link in FIG. 22A.

FIG. 25B is a schematic diagram of a second structure of the intermediate frequency auxiliary transmit link in FIG. 22A.

FIG. 25C is a schematic diagram of a structure of the radio frequency auxiliary transmit link in FIG. 22A.

FIG. 25D is a schematic diagram of another structure of the radio frequency auxiliary transmit link shown in FIG. 25C.

FIG. 26 is a schematic diagram of an application of a calibration link corresponding to a primary receive path according to an embodiment of the present disclosure.

FIG. 27A is a schematic diagram of a first application of an intermediate frequency auxiliary transmit link according to an embodiment of the present disclosure.

FIG. 27B is a schematic diagram of a second application of an intermediate frequency auxiliary transmit link according to an embodiment of the present disclosure.

Detailed Description

Radars are electronic devices that use electromagnetic waves to detect targets. A radar chip transmits a beam through a signal transmit link. When the transmitted beam hits an obstacle, an echo reflected back from the obstacle is received by a receive antenna and transmitted to the radar chip. The radar chip determines a position, a distance, a speed and other information of the target relative to an electromagnetic wave emission site. With the development of microelectronics and other technologies, radars have gradually been widely used, especially millimeter wave radars (such as automotive radars). The millimeter wave radar has a small antenna, and has been widely used in self-steering, smart home devices and industrial automation devices. At present, miniaturization and integration of radars have become the current development trend.

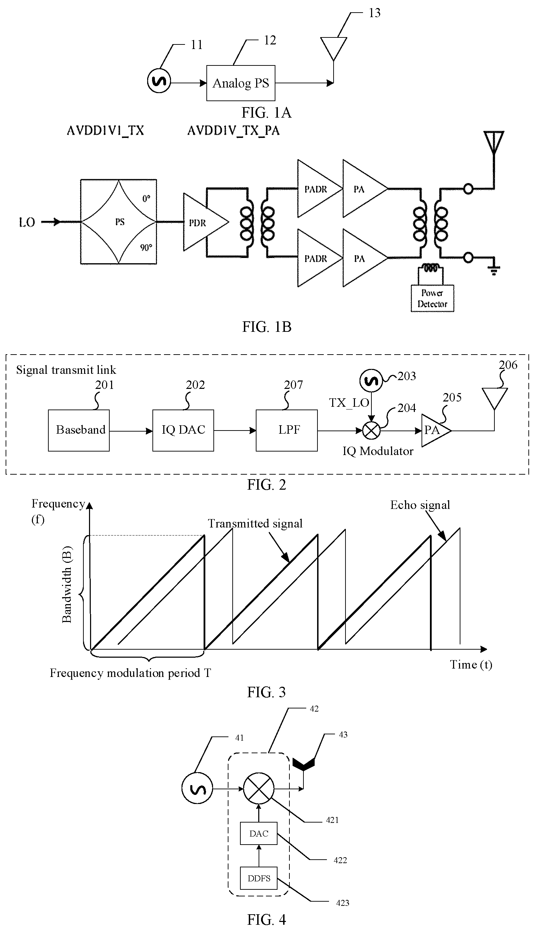

FIG. 1A is a simplified schematic diagram of a signal transmit link of an analog phase shifter architecture, and FIG. 1B is a simplified schematic diagram of the analog phase shifter in the signal transmit link shown in FIG. 1A. As shown in FIG. 1A, for a transmit link, when a sensor transmits a signal, a Local Oscillator (LO) signal (such as a sweep frequency signal in the 77 GHz band) is generated by a signal generator 11 formed by a Phase Locked Loop (PLL), for example. The LO signal may be an FMCW signal, for example. The analog phase shifter (Analog PS) 12 performs a phase shift operation on a received LO signal which is then radiated into a predetermined spatial area through a transmit antenna 13 to perform operations such as target detection and measurement. Optionally, in a transmit link structure shown in FIG. 1A, a corresponding analog phase shifter structure may be as shown in FIG. 1B, and a specific phase shifting principle thereof may be as shown in the following formula:

$$LO_{IN} \xrightarrow{0/90° \text{ shifter}} \begin{cases} LO_I = \sin\left(\omega_c t + \varphi(t)\right) \\ LO_Q = \cos\left(\omega_c t + \varphi(t)\right) \end{cases} \xrightarrow{PA} LO_{OUT} = A \cdot LO_I + B \cdot LO_Q = \sqrt{A^2 + B^2} \sin\left(\omega_c t + \varphi(t) + \theta\right)$$

$$\theta = \tan\left(\frac{B}{A}\right).$$

That is, two-way signals (i.e., LOI and LOQ) are obtained by phase shifting the received LO signal (i.e., LOIN) by 0° and 90°, respectively. The two-way signals LOI and LOQ are amplified by a Power Amplifier (PA) and then fitted into an output signal LOOUT. That is, the output signal LOOUT is phase shifted by θ compared with the input signal LOIN, where a value of θ is determined by an amplitude A of the signal LOI and an amplitude B of the signal LOQ.

In addition, the analog phase shifter architecture can be implemented as a delay line unit. That is, using the Narrow-band assumption of signals to perform phase shifting by means of time delay. A principle is as shown in the following formula:

$$LO_{IN} = \sin\left(\omega_c t + \varphi(t)\right) \xrightarrow{\text{Delay Line Unit}} LO_{OUT} = \sin\left(\omega_c(t - \tau) + \varphi(t - \tau)\right) \overset{\text{Narrow-band assumption}}{\approx} \sin\left(\omega_c(t - \tau) + \varphi(t)\right)$$

Where τ is delay time by the delay line unit.

Because the analog phase shifter has a low phase modulation resolution and a low phase modulation accuracy, it cannot meet the needs of current sensors. Besides, although the phase modulation resolution and the phase modulation accuracy of the analog phase shifter can be improved by calibration, a phase shifter of the analog architecture needs to be calibrated off-line, which greatly increases difficulty and complexity in engineering implementation and mass production. Besides, the analog phase shifter further has some serious problems, such as large area, large loss, poor stability and channel coupling.

Because the signal transmit link with the analog phase shifter architecture has some problems, such as low phase modulation resolution, low phase modulation accuracy and the like, the signal transmit link cannot meet high performance requirements of a vehicle radar system.

As shown in FIG. 2, a signal transmit link is provided in an embodiment of the present disclosure. The signal transmit link can be applied to a radar system. The signal transmit link may include a transmission baseband digital module 201, an IQ Digital-to-analog Converter (DAC) module 202, a transmission local oscillator 203 and a transmission quadrature modulator 204. The transmission baseband digital module 201 may be configured to generate two-way orthogonal transmission digital baseband signals and transmit the two-way orthogonal transmission digital baseband signals to an I channel and a Q channel of the IQ digital-to-analog conversion module 202. That is, the digital-to-analog conversion module 202 is configured to convert the two-way orthogonal transmission digital baseband signals into two transmission analog baseband signals. The transmission local oscillator 203 is configured to supply a transmission local oscillator signal TX_LO; The transmission quadrature modulator 204 is configured to perform a phase shift operation while shifting a frequency of the transmission local oscillator signal TX_LO based on the two transmission analog baseband signals, thereby forming a predetermined phase-shifted FMCW radio frequency transmission signal.

In an embodiment of the present disclosure, the transmission digital baseband signal provided by the transmission baseband digital module 201 may include preset phase information. The digital-to-analog conversion module 202 may convert the transmission digital baseband signal into the transmission analog baseband signal by performing digital-to-analog conversion on the received transmission digital baseband signal (e.g., converting the digital signal into the analog signal without changing the phase information). The transmission quadrature modulator 204 may mix the received transmission analog baseband signal with the transmission local oscillator signal TX_LO generated by the transmission local oscillator 203 to perform a preset phase shift operation while shifting a frequency of the transmission local oscillator signal based on the transmission analog baseband signal to form the predetermined phase-shifted FMCW radio frequency transmission signal.

According to the signal transmit link in the embodiment of the present disclosure, a digital phase shifter architecture is formed by using the transmission baseband digital module 201, the digital-to-analog conversion module 202 and the transmission quadrature modulator 204. Because the baseband signal in the architecture is generated in a digital domain, has better orthogonality and lower side lobes, a phase shifting phase can be generated very accurately, resulting in higher phase modulation accuracy, thereby achieving a vehicle radar system with high-precision digital phase shift function, reducing a requirement on isolation between antennas, while has advantages such as small link loss, low cost and no off-line calibration, and can enable a more flexible wave transmission solution, such as high-performance Doppler division multiplexing and frequency division multiplexing, and can enable frequency response compensation in the digital domain.

In an embodiment of the present disclosure, because the transmission baseband digital module 201 provides the digital signal, the transmission modulator is configured as the quadrature modulator (IQ modulator) and the digital-to-analog conversion module 202 is configured as a quadrature Digital-to-analog Converter (IQ DAC) to adapt signal characteristics better.

In an embodiment of the present disclosure, the transmission local oscillator 203 may be an architecture including a Phase-Locked Loop (PLL), which may provide electromagnetic wave (e.g. laser, microwave, etc.) signals.

In some exemplary implementations, the signal transmit link further includes a Power Amplifier (PA) 205, wherein the power amplifier 205 is configured to amplify the phase-shifted radio frequency signal and output the amplified signal to a transmit antenna.

In some exemplary implementations, the signal transmit link further includes a transmit antenna 206, wherein the transmit antenna 206 is configured to radiate the amplified signal to a preset spatial area.

In an embodiment of the present disclosure, the signal amplified by the power amplifier 205 can be radiated into the preset spatial area through an integrated packaged or external provided transmit antenna 206. That is, the transmission local oscillator 203, the digital phase shifter, and the transmit antenna 206 may be integrated into one device, or may be components separated from each other. For example, the transmission local oscillator 203 and the digital phase shifter may be integrated into a package to form an SoC chip for example, and the transmit antenna 206 may be connected through a peripheral port of the chip, and formed on a carrier such as a PCB board. Besides, in some alternative embodiments, the transmit antenna 206 may be integrated on a package of the chip to form an Antenna in Package (AiP) or an Antenna on Package (AoP), which have a chip structure with a packaged antenna.

In some exemplary implementations, a bandwidth of the sweep signal ranges above 2 GHz. For example, for radar, an electromagnetic wave of a transmission signal transmitted by a transmit antenna of a frequency modulated continuous wave radar system is a high-frequency frequency modulated continuous wave, and an echo signal received by a receive antenna of the frequency modulated continuous wave radar system is an electromagnetic wave reflected/scattered back from a target object. FIG. 3 shows a schematic diagram of waveforms of an exemplary FMCW transmit signal and an echo signal. As shown in FIG. 3, frequencies of the transmit signal and the echo signal change regularly over time. The frequency modulated continuous wave is generally in a zigzag shape, a triangle shape, and the like. In the present disclosure, the zigzag shape is taken as an example for illustration. An electromagnetic wave in each frequency modulation period T is referred to as a chirp, and a frequency of a signal of each chirp increases linearly over time. In an embodiment of the present disclosure, a bandwidth range B of one chirp is greater than or equal to 2 GHz.

In some exemplary implementations, the transmission digital baseband signal is a single-tone signal, and the transmission local oscillator signal is a sweep signal.

In an embodiment of the present disclosure, the transmission local oscillator 203 may be configured to provide an FMCW signal in a centimeter wave band or a millimeter wave band (such as a band of 3.1 GHz, 24 GHz, 60 GHz, 77 GHz, etc.) in microwaves, the transmission baseband digital module 201 may be configured to provide a single-tone transmission digital baseband signal on the order of MHz (e.g. from 3 MHz to 5 MHz (such as 3 MHz, 4 MHz, 5 MHz, etc.)) That is, the digital-to-analog conversion module 202 obtains a single-tone transmission analog baseband signal in a corresponding frequency range by performing digital-to-analog conversion on the single-tone transmission digital baseband signal on the order of MHz, and the transmission quadrature modulator 204 may be configured to perform an up-mixing operation or a down-mixing operation on the received FMCW signal in the millimeter wave band based on the received single-tone transmission analog baseband signal, so as to perform the preset phase shift operation on the FMCW signal.

For example, the FMCW signal in the 3.1 GHz band may include a sweep signal in a band between 3.1 GHz and 10.6 GHz (such as between 7.163 and 8.812 GHz), the FMCW signal in the 77 GHz band may include a sweep signal in a band between 76 GHz and 81 GHz, or a sweep signal in a band between 76 GHz and 77 GHz, between 77 GHz and 79 GHz, between 79 GHz and 81 GHz, or the like.

In some other exemplary implementations, the transmission digital baseband signal is a sweep signal, and the transmission local oscillator signal is a single-tone signal.

In an embodiment of the present disclosure, the transmission local oscillator 203 may be configured to provide a single-tone transmission local oscillator signal in a centimeter wave band or a millimeter wave band (such as a band of 3.1 GHz, 24 GHz, 60 GHz, 77 GHz, etc.) in microwaves, the transmission baseband digital module 201 may be configured to provide a transmission digital baseband FMCW signal on the order of MHz (e.g. from 3 MHz to 5 MHz (such as 3 MHz, 4 MHz, 5 MHz, etc.)) That is, the digital-to-analog conversion module 202 obtains a transmission analog baseband FMCW signal in a corresponding frequency range by performing digital-to-analog conversion on the transmission digital baseband FMCW signal on the order of MHz, and the transmission quadrature modulator 204 may be configured to perform an up-mixing operation or a down-mixing operation on the received single-tone transmission local oscillator signal in the centimeter wave band or the millimeter wave band based on the received transmission analog baseband FMCW signal, so

EP 4 531 310 A1

as to perform frequency sweep or the preset phase shift operation on the single-tone transmission local oscillator signal.

For example, the single-tone transmission local oscillator signal in the band of 3.1 GHz may be a single-tone analog signal in a fixed band such as 3.1 GHz, 5 GHz, 6 GHz, 8 GHz, 10.6 GHz and the like. The single-tone transmission local oscillator signal in the band of 77GHz may be a single-tone analog signal in a fixed band such as 76 GHz, 77 GHz, 78 GHz, 79 GHz, 80 GHz, 81 GHz and the like.

In some exemplary implementations, the signal transmit link further includes a Low-Pass Filter (LPF) 207 disposed between the digital-to-analog conversion module 202 and the transmission quadrature modulator 204, configured to low-pass filter the transmission analog baseband signal output from the digital-to-analog conversion module 202 and to output to the transmission quadrature modulator 204.

As shown in FIG. 2, the transmission baseband digital module 201 generates two-way orthogonal digital baseband signals (i.e., an I-channel digital baseband signal and a Q-channel digital baseband signal), and transmits the generated digital baseband signals to the digital-to-analog conversion module 202 (including two identical DACs (i.e., IQ DACs)) to obtain two-way analog baseband signals. Then the two analog baseband signals are input into the low-pass filter 207 to filter out an out-of-band noise signal, and a modulated radio frequency signal is obtained by the transmission quadrature modulator 204 performing quadrature modulation, and the modulated radio frequency signal is radiated through the power amplifier 205 and the transmit antenna 206.

In some exemplary implementations, the signal transmit link may further include a Direct Digital Frequency Synthesizer (DDFS) (not shown in FIG. 2) disposed between the transmission baseband digital module 201 and the digital-to-analog conversion module 202, the direct digital frequency synthesizer may be configured to implement at least one of a plurality of signal waveforms and wave transmission modes such as Code-Division Multiplexing (CDM), Doppler Division Multiplexing (DDM), Time-Division Multiplexing (TDM), Space Division Multiplexing (SDM), Circuit Switch Data (CSD), Digital Intermediate Frequency (Digital IF) and the like based on a received source signal, thereby achieving flexible configuration of signal transmission forms and transmission waveforms.

As shown in FIG. 4, a signal transmit link is further provided in an embodiment of the present disclosure, which is applied in the electromagnetic wave transmit device and includes a first signal source 41 and a digital phase shift module 42, wherein the first signal source 41 is configured to generate a first analog signal, and the digital phase shift module 42 is configured to performing frequency shift and/or phase shift on the first analog signal using digital quadrature modulation, thereby forming an FMCW radio frequency transmit signal.

The signal transmit link according to the embodiment of the present disclosure includes the first signal source 41 and the digital phase shift module 42, wherein the first signal source 41 may be configured to provide the first analog signal, the digital phase shift module 42 may be configured to generate a phase shift signal in a digital domain, and the digital phase shift module 42 may further perform phase shift on the first analog signal based on the generated phase shift signal, thereby performing a preset phase shift operation on the first analog signal.

In some exemplary implementations, the first signal source 41 may be a transmission local oscillator, and the first analog signal may be a transmission Local Oscillator (LO) signal.

In some exemplary implementations, the signal transmit link further includes a power amplifier (not shown) configured to amplify the FMCW radio frequency transmit signal.

In some exemplary implementations, the signal transmit link further includes a transmit antenna 43 configured to radiate the amplified FMCW radio frequency transmit signal to a predetermined area.

As shown in FIG. 4, in some alternative embodiments, the signal transmit link may include the first signal source 41, the digital Phase Shift (PS) module 42, the transmit antenna 43 and the like. That is, the first signal source 41 may be configured to provide an LO signal, and the digital phase shift module 42 may be configured to perform a preset phase shift operation on a received LO signal so that the phase shifted LO signal is radiated into a preset spatial area through the transmit antenna 43. The first signal source 41 may be an architecture including a Phase-Locked Loop (PLL), and may provide electromagnetic wave (such as laser, microwave, etc.) signals. The first signal source 41, the digital phase shift module 42 and the transmit antenna 43 may be integrated into an integrated device, or may be components separated from each other. For example, the first signal source 41 and the digital phase shift module 42 may be integrated into a package to form an SoC chip for example, and the transmit antenna 43 may be connected through a peripheral port of the chip, and formed on a carrier such as a PCB board. Besides, in some alternative embodiments, the transmit antenna 43 may be integrated on a package of the chip to form an AiP or an AoP, which are a chip structure with a packaged antenna.

In some exemplary implementations, the digital phase shift module 42 includes a second signal source 423, a digital-to-analog conversion module 422, and a mixer 421 connected in sequence, wherein the second signal source 423 is configured to generate a first digital signal, the digital-to-analog conversion module 422 is configured to convert the first digital signal into a second analog signal, and the mixer 421 is configured to perform frequency shift and/or phase shift on the first analog signal based on the second analog signal to form an FMCW radio frequency transmit signal.

As shown in FIG. 4, the digital phase shift module 42 in the embodiment of the present disclosure may include the mixer 421, the digital-to-analog conversion module (i.e., DAC) 422, the second signal source (such as a digital baseband signal source) 423 and the like. That is, the second signal source 423 may be configured to provide the first digital signal,

8

the digital-to-analog conversion module 422 may be configured to perform digital-to-analog conversion on the received first digital signal to convert the first digital signal into the second analog signal, the mixer 421 may be configured to mix the received second analog signal with the received first analog signal from the first signal source 41 to achieve performing a setting phase shift operation on the first analog signal with the first digital signal. Alternatively, when the signal transmit link provides a sweep signal (e.g. an FMCW laser signal or an FMCW microwave signal, a sweep continuous wave signal may be output based on a sweep transmission signal provided by the first signal source 41 and/or a sweep first digital signal provided by the second signal source 423, which are mixed by the mixer 421.

In some alternative embodiments, based on the structure shown in FIG. 4, the first signal source 41 may be configured to provide an FMCW signal (i.e., the first analog signal) in a centimeter wave band or a millimeter wave band (such as the band of 3.1 GHz, 24 GHz, 60 GHz, 77 GHz, etc.) in microwaves, the second signal source 423 may be configured to provide a first digital signal on the order of MHz (e.g., from 3 MHz to 5 MHz (such as 3 MHz, 4 MHz, 5 MHz, etc.). That is, the digital-to-analog conversion module 422 obtains a second analog signal in a corresponding frequency range after performing digital-to-analog conversion on the first digital signal on the order of MHz, and the mixer 421 may be configured to perform an up-mixing operation or a down-mixing operation on the received FMCW signal in the millimeter wave band based on the received second analog signal in a fixed band, so as to perform the preset phase shift operation on the FMCW signal.

In some alternative embodiments, the signal in the centimeter wave band of 3.1 GHz may range from 3.1 GHz to 10.6 GHz, e.g. 3.1 GHz, 5 GHz, 6 GHz, 8 GHz, 10.6 GHz, etc. The signal in the millimeter wave band of 77 GHz may include a signal in a band ranging from 76 GHz to 81 GHz, e.g. a sweep signal ranging from 76 GHz to 77 GHz, from 77 GHz to 79 GHz, or ranging from 79 GHz to 81 GHz, or a signal in a fixed band, e.g. 76 GHz, 77 GHz, 78 GHz, 79 GHz, 80 GHz, or 81 GHz.

In some exemplary implementations, the first digital signal includes two-way orthogonal transmission digital baseband signals, the second signal source 423 is a transmission baseband digital module, the digital-to-analog conversion module 422 includes two identical digital-to-analog converters, the transmission baseband digital module is configured to generate two-way orthogonal transmission digital baseband signals and send the two-way orthogonal transmission digital baseband signals to one of the two digital-to-analog converter, respectively, and the digital-to-analog conversion module 422 is configured to convert the two-way orthogonal transmission digital baseband signals into two transmission analog baseband signals.

Based on the structure shown in FIG. 4 in which the second signal source 423 provides the first digital signal, in order to adapt signal characteristics better, the mixer 421 may be configured as an IQ mixer, and the digital-to-analog conversion module 422 may be configured as an IQ DAC. Besides, the second signal source 423 may be configured to provide a digital baseband signal source (such as Direct Digital Frequency Synthesizer (DDFS)) for phase shifting and/or configured as a waveform control to provide a corresponding source signal. DDFS is a digital baseband signal source with adjustable phase, which generates a digital baseband signal.

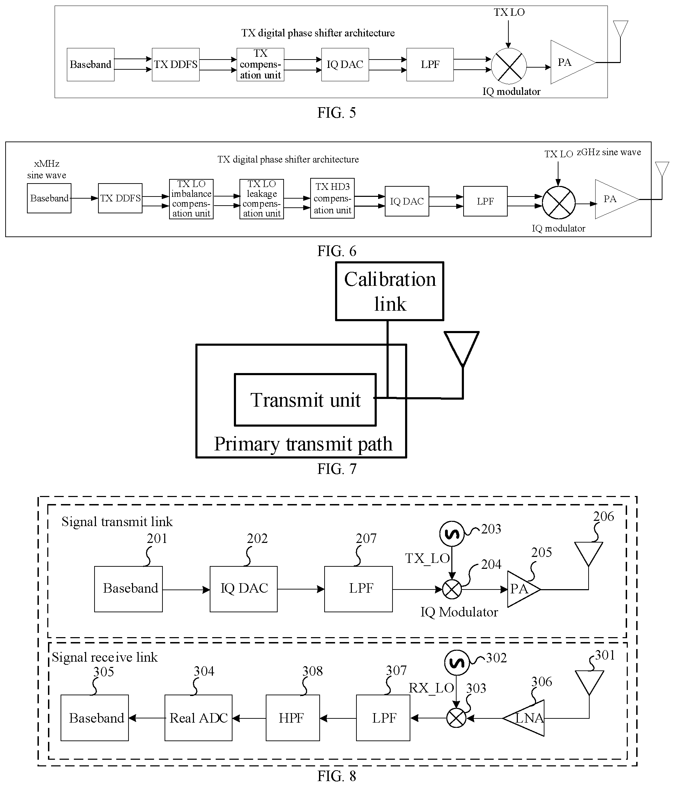

As shown in FIG. 5, a signal transmit link of a digital phase shifter architecture (TX digital phase shifter architecture) may include a digital baseband signal source (Baseband), a Direct Digital Frequency Synthesizer (DDFS), an IQ Digital-to-Analog Converter (DAC), a Low-Pass Filter (LPF), an IQ modulator/IQ mixer, a Power Amplifier (PA) and the like. The baseband signal source is configured to supply a digital phase shift source signal (i.e., above-mentioned first digital signal), the direct digital frequency synthesizer may be configured to implement at least one of a plurality of signal waveforms and wave transmission modes, such as Code-Division Multiplexing (CDM), Doppler Division Multiplexing (DDM), Time-Division Multiplexing (TDM), Space Division Multiplexing (SDM), Circuit Switch Data (CSD), Digital Intermediate Frequency (Digital IF) and the like based on a received source signal, thereby achieving flexible configuration of signal transmission forms and transmission waveforms. The signal amplified by the power amplifier can be radiated into the preset spatial area through an integrated packaged or external transmit antenna.

According to the signal transmit link of the digital phase shifter architecture in the embodiment of the present disclosure, because the digital phase shifter architecture is configured to generate a baseband signal sequence in a digital domain, generate an analog baseband signal (i.e., a second analog signal) by the DAC, and then modulate a transmitted signal to a high frequency by a quadrature mixer. In other words, the baseband signal in the architecture is generated in the digital domain, has better orthogonality and lower side lobes, the baseband signal can generate the phase shifting phase very accurately and thereby improving the higher phase modulation accuracy.

In some alternative embodiments, for the signal transmit link of the digital phase shifter architecture, when a Radio Frequency Local Oscillator (RF LO) sweeps to implement the transmitted signal as an FMCW signal, a compensation unit may be added to the signal transmit link for problems, e.g. TX IQ imbalance, signal leakage (such as TX LO leakage) and Harmonic Distortion (HD) which are caused by IQ mismatch. As shown in FIG. 5, a TX compensation unit is provided between the TX DDFS and the IQ DAC to perform operations such as calibration and compensation in the signal transmit link of the digital phase shifter architecture to solve at least one of the above-described problems. HD caused by third-order nonlinearity in the baseband can be simply referred to as HD3.

In some alternative embodiments, as shown in FIG. 6, a TX compensation unit may include at least one of a TX LO leakage compensation unit, a TX IQ imbalance compensation unit, and a TX HD3 compensation unit. The TX LO leakage compensation unit may be configured to perform a compensation operation for signal leakage, the TX IQ imbalance compensation unit may be configured to perform a compensation operation for IQ imbalance, and the TX HD3 compensation unit may be configured to perform a compensation operation for the HD3 described above. The TX IQ imbalance compensation unit is configured to perform a compensation operation for at least one of IQ modulator imbalance and IQ channel imbalance. In addition, when the compensation unit includes at least two of the TX LO leakage compensation unit, the TX IQ imbalance compensation unit and the TX HD3 compensation unit, compensation may be performed synchronously according to actual demands, signal characteristics, and the like (for example, in a parallel mode), or the compensation may be performed sequentially (for example, in a series mode). As shown in FIG. 6, IQ compensation may be performed at first, then LO compensation may be performed, and HD3 compensation may be performed finally.

In some alternative embodiments, the signal transmit link of the digital phase shifter architecture may further include an error correction module (such as TX DAC Board Error Correction) for DAC and an Additive White Gaussian Noise (AWGN) module for Gaussian white noise, etc., which are not shown in the figures, and may be added or deleted according to actual demands. I in IQ mentioned in the embodiments of the present disclosure may be the abbreviation of In-Phase, Q in IQ may be the abbreviation of Quadrature, and RF may be the abbreviation of Radio Frequency.

In an alternative embodiment, the compensation operation for the IQ imbalance may be implemented by compensating a conjugate signal to the BB (baseband) signal to cancel out an image component reversely, and the compensation operation is not affected by a calibration mode for the IQ imbalance. The compensation operation for the LO leakage may be implemented by adjusting two DC components (i.e. DC bias) of I channel and Q channel. Similarly, a calibration method for the LO leakage has no impact on its compensation solution. For HD3, HD3 is mainly generated from third-order harmonic distortion in the quadrature mixer V/I converter, and harmonic distortion is affected by DC bias. When both LO leakage and HD3 of a transmit link need to be calibrated, the HD3 needs to be calibrated after the LO leakage is calibrated, so as to ensure an accurate performance of HD3 calibration. When all of the LO leakage, IQ imbalance, and the HD3 of the transmit link need to be calibrated, the IQ imbalance is calibrated after the LO leakage is calibrated, and the HD3 is calibrated finally, so as to ensure the accurate performance.

In addition, using a digital pre-compensation architecture based on a digital cubic module and a digital pre-compensation architecture based on a frequency multiplier waveform generator module to compensate the HD3, may directly affect a subsequent calibration solution and a subsequent compensation process.

Specifically, in an alternative embodiment, for the digital pre-compensation architecture based on the digital cubic module, after the LO leakage is calibrated and compensated, the IQ imbalance is calibrated under a stable DC bias. And then IQ Imbalance is compensated. After the IQ imbalance is compensated, a pre-compensation result of IQ Imbalance of the I-channel and the Q-channel is obtained respectively, and then the fundamental source of HD3, i.e. HD3 compensation coefficient, is calibrated according to the pre-compensation result of IQ Imbalance of the I-channel and the Q-channel. Then the HD3 compensation coefficient is used to compensate the third-order harmonic distortion.

In an alternative embodiment, for the digital pre-compensation architecture based on the frequency multiplier waveform generator module, an HD3 compensation coefficient can be calibrated after the LO leakage is calibrated and compensated, and the IQ imbalance can be calibrated and compensated under a stable DC bias. According to a compensated result, actual waveforms of the I-channel signal and the Q-channel signal and the HD3 compensation coefficient are calculated respectively, and frequency tripling waveform information and frequency quintupling waveform information that need to be pre-compensated are inversely calculated.

In another alternative embodiment, for the digital pre-compensation architecture based on the frequency multiplier waveform generator module, the LO leakage may be calibrated and compensated at first, the IQ imbalance compensation coefficient can be calibrated by observing in times (e.g. three times), and then a compensation coefficient at an HD3 image position may be calibrated by further observing (e.g. twice); Finally, a frequency tripling coefficient and a frequency quintupling coefficient that need to be pre-compensated are inversely calculated according to the HD3 compensation coefficient and the compensation coefficient at the HD3 image position. It should be noted that the observation in the embodiment of the present disclosure is used to represent operations such as testing and comparison and analysis of different test results.

FIG. 7 is a schematic diagram of calibrating a primary transmit path using a calibration link according to an embodiment of the present disclosure. As shown in FIG. 7, this calibration link is used to calibrate a main transmit path used to transmit radio frequency signals. The primary transmit path includes a transmit unit connected with a transmit antenna, the calibration link is integrated in an integrated circuit including the primary transmit path. Because the calibration link is integrated in the integrated circuit including the primary transmit path, the primary transmit path can be calibrated in real time, without an external equipment calibrating the primary transmit path.

The calibration link includes a calibration unit connected between the transmit unit and the transmit antenna, and the calibration unit may be configured to calibrate the radio frequency signal output by the transmit unit, the transmit unit may be configured to be calibrated based on calibration information resulting from the calibration link, wherein a radio frequency signal output by the calibrated transmit unit is radiated to a predetermined area through the transmit antenna.

The primary transmit path (transmitter) may include a Phase Shift module (PS), a Power Amplifier (PA), a Power Detector (PD), and the like. For example, the transmit path may be a signal transmit link of a digital phase shifter architecture described in any embodiment of the present disclosure, details of which may refer to related illustrations and text descriptions, which are not be repeated here. Because the transmit path uses the digital phase shifter architecture, the transmit path implements the phase shift operation more accurately, and also can support Doppler Division Multiplexing (DDM), Frequency Division Multiplexing (FDM) and other modes of a multi-antenna. Furthermore, the calibration operation to RF phase shifter can also be omitted, reducing isolation and coupling in a phase shifting system, and reducing link loss and manufacturing costs. In addition, to solve possible problems such as TX IQ mismatch and the LO leakage, the transmission path in the digital phase shifter architecture may also support RF frequency response compensation, an IQ imbalance calibration operation and an LO leakage calibration operation in the digital domain.

To solve problems in the transmission path, such as the TX IQ mismatch, the LO leakage and a frequency response problem, relevant calibration operations can be performed by configuring the calibration link.

Because the calibration link is integrated in the integrated circuit including the primary transmit path, the calibration unit can calibrate the transmission unit in real time. In addition, the calibration unit and the transmission unit operates in a same environment, so that the calibration operation of the calibration unit will not be changed if the operating environment of the transmission unit is changed, the calibration unit can obtain more accurate calibration information, thereby improving a signal processing performance of the transmission unit.

According to the calibration link in the embodiment of the present disclosure, because the calibration link is integrated in the integrated circuit including the primary transmit path, the calibration link can perform a calibration operation on the primary transmit path in real time, and the calibration operation of the calibration link will not be changed when the operating environment of the primary transmit path is changed, so that the primary transmit path can obtain more accurate calibration information, thereby improving a signal processing performance of the primary transmit path.

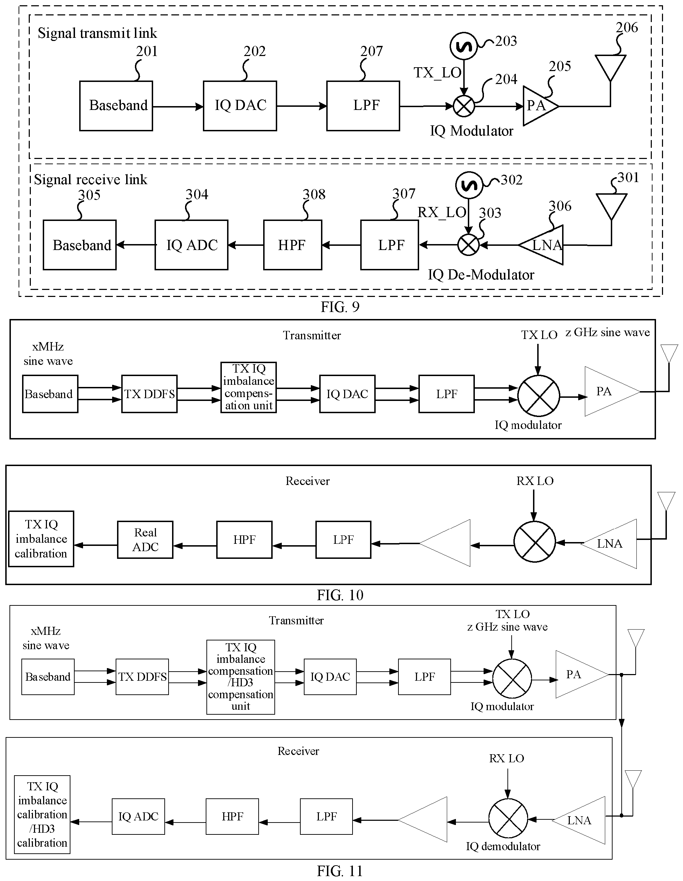

A signal transceiving link is further provided in an embodiment of the present disclosure, including a signal transmit link and a signal receive link. As shown in FIG. 8 or FIG. 9, the signal transmit link may include the transmission baseband digital module 201, the digital-to-analog conversion module 202, the transmission local oscillator 203 and the transmission quadrature modulator 204, wherein the transmission baseband digital module 201 is configured to generate the two orthogonal transmission digital baseband signals and send the generated transmission digital baseband signals to the digital-to-analog conversion module 202, the digital-to-analog conversion module 202 is configured to convert the transmission digital baseband signal to a transmission analog baseband signal, the transmission local oscillator 203 is configured to provide the transmission local oscillator signal TX_LO, the transmission quadrature modulator 204 is configured to perform the phase shift operation on the transmission local oscillator signal TX_LO based on the transmission analog baseband signal to obtain a phase-shifted radio frequency signal.

The signal receive link may include a receiving local oscillator 302, a receiving mixer 303, an Analog-to-Digital Converter (ADC) 304 and a receiving baseband digital module 305, wherein the receiving local oscillator 302 is configured to provide a receiving local oscillator signal, the receiving mixer 303 is configured to mix a received echo signal based on the receiving local oscillator signal to obtain a receiving analog baseband signal, the analog-to-digital converter 304 is configured to convert the receiving analog baseband signal to a receiving digital baseband signal, the receiving baseband digital module 305 is configured to process the receiving digital baseband signal to achieve target detection and/or radio communication, for example, to obtain parameter information such as distance, velocity, angle, altitude, and micro-motion characteristics of the target.

In an embodiment of the present disclosure, after two ideal baseband signals (i.e., an I-channel digital baseband signal and a Q-channel digital baseband signal) generated by the transmission baseband digital module 201 passing through the digital-to-analog conversion module 202, an excellent complex signal can be obtained, and a phase of the complex signal can be accurately controlled by the transmission baseband digital module 201. According to a structure of a receiving in the signal transceiving link as shown in FIG. 8 or FIG. 9, phase information of the radio frequency signal of the signal transmit link can be acquired effectively, and multi-antenna phase modulation can be implemented.

In some exemplary implementations, the signal transmit link may further include the power amplifier 205, wherein the power amplifier 205 is configured to amplify the phase-shifted radio frequency signal and output the amplified signal to a transmit antenna.

In some exemplary implementations, the signal transmit link may further include the transmit antenna 206, wherein the transmit antenna 206 is configured to radiate the amplified signal to a preset spatial area.

In some exemplary implementations, the signal receive link may further include a receive antenna 301, wherein the receive antenna 301 is configured to receive the echo signal, which is a signal formed by a signal transmitted by the signal transmit link and being reflected and/or scattered by the target.

In some exemplary implementations, the receiving local oscillator signal may be a sweep signal, or the receiving local oscillator signal may be a single-tone signal.

In the embodiment of the present disclosure, in the signal transceiving link described above, a frequency of the TX-LO signal received by the transmission quadrature modulator 204 in the signal transmit link may be the same as a frequency of an RX-LO signal received by the receiving mixer 303 in the signal receive link. For example, assuming that a signal output by the transmission baseband digital module 201 is a sine wave in x MHz, both the TX-LO signal and the RX-LO signal may be sine waves in z GHz, where both x and z are positive numbers, generally between 0 and 1000.

Hereinafter, the principles of the present disclosure will be described with the signal transceiving link shown in FIG. 8. As mentioned above, for the FMCW radar system, there are two wave transmission solutions for the signal transmit link: 1) the transmission local oscillator signal is a sweep signal, and the transmission digital baseband signal is a single-tone signal; 2) the transmission local oscillator signal is a single-tone signal, and the transmission digital baseband signal is a sweep signal. Assuming that the transmission local oscillator signal TX_LO, the transmission digital baseband signal and the modulated transmit signal are represented by TLO (t), BB (t) and TX (t), respectively, subscripts "I" and "Q" are used to represent the I-channel signal and the Q-channel signal, and a superscript "a" is used to represent a complex signal form, then in the two wave transmission solutions, signals at each stage of the signal transmit link can be represented as follows.

1) The transmission local oscillator signal is the sweep signal, and the transmission digital baseband signal is the single-tone signal:

$$BB^a(t) = e^{j2\pi f_{bb}t + \emptyset_0}(1);$$

$$TLO^a(t) = e^{j2\pi \ (f_{tlo}t + \frac{\alpha}{2}t^2) \ + \varphi_0}(2);$$

$$TX^a(t) = BB^a(t) \times TLO^a(t) = e^{j2\pi \ (f_{tlo}t + f_{bb}t + \frac{\alpha}{2}t^2) \ + \emptyset_0 + \varphi_0}(3);$$

$$TX(t) = BB_I(t) \times TLO_I(t) - BB_Q(t) \times TLO_Q(t) = \cos \ (2\pi \ (f_{tlo}t + f_{bb}t + \frac{\alpha}{2}t^2) \ + \emptyset_0 + \varphi_0)(4).$$

2) The transmission local oscillator signal is the single-tone signal, and the transmission digital baseband signal is the sweep signal.

$$BB^a(t) = e^{j2\pi(f_{bb}t + \frac{\alpha}{2}t^2) + \emptyset_0}(5);$$

$$TLO^a(t) = e^{j2\pi f_{tlo}t + \varphi_0}(6);$$

$$TX^a(t) = BB^a(t) \times TLO^a(t) = e^{j2\pi \ (f_{tlo}t + f_{bb}t + \frac{\alpha}{2}t^2) \ + \emptyset_0 + \varphi_0}(7);$$

$$TX(t) = BB_I(t) \times TLO_I(t) - BB_Q(t) \times TLO_Q(t) = \cos \ (2\pi \ (f_{tlo}t + f_{bb}t + \frac{\alpha}{2}t^2) \ + \emptyset_0 + \varphi_0)(8).$$

Wherein $\alpha = \frac{B}{T_{sweep}}$ is a sweep slope of the FMCW signal, $f_{bb}$ is a starting frequency of the transmission digital baseband signal, $f_{tlo}$ is a starting frequency of the transmission local oscillator signal, $\emptyset_0$ is an initial phase of the transmission digital baseband signal, $\varphi_0$ is an initial phase of the transmission local oscillator signal.

Assuming that the receiving local oscillator signal RX_LO in the signal receive link shown in FIG. 8 is represented by RLO (t), and the receiving local oscillator signal RX_LO in this embodiment is the sweep signal, RLO (t) can be represented as:

$$RLO(t) = \cos \ (2\pi \ (f_{rlo}t + \frac{\alpha}{2}t^2) \ + \Phi_0)(9);$$

wherein $f_{rlo}$ is a starting frequency of the receiving local oscillator signal, $\Phi_0$ is an initial phase of the receiving local oscillator signal, then, the radio frequency signal transmitted by the signal transmit link generates an echo signal after being reflected/scattered by the target, and after the echo signal passing through the receive antenna 301, the receiving mixer 303 and the receiving low-pass filter 307, the following formula is obtained:

$$x(t) = LPF(TX(t) \times RLO(t - \tau)) = \cos\left(2\pi((f_{tlo} + f_{bb} - f_{rlo})\tau + \alpha\tau t - \frac{\alpha\tau^2}{2}) + \emptyset_0 + \varphi_0 - \Phi_0)\right) \quad (10);$$

wherein $\tau$ represents a time delay of the radio frequency signal transmitted by the signal transmit link returning to the signal receive link after being reflected/scattered by the target.

The above formula illustrates that both the above-mentioned sweeping methods can control the initial phase $\Phi_0$ of the transmission digital baseband signal to perform accurate phase modulation, thereby implementing high-precision and high-accuracy phase shifting, avoiding direct phase shifting at high frequencies.

In some alternative embodiments, the receive antenna 301 may be connected through a peripheral port of the chip and formed on a carrier such as a PCB board. Besides, in some other alternative embodiments, the receive antenna may be integrated on a package of the chip to form an AiP or an AoP, which is a chip structure with a packaged antenna.

In some exemplary implementations, the signal receive link may further include a Low Noise Amplifier (LNA) 306 disposed between the receive antenna 301 and the receiving mixer 303, the echo signal received by the receive antenna 301 is low-noise amplified, and then transmitted to the receiving mixer 303.

In some exemplary implementations, the signal receive link may further include a Low-Pass Filter (LPF) 307 and a High-Pass Filter (HPF) 308 connected in series, which are disposed between the receiving mixer 303 and the analog-to-digital converter 304, the Low-Pass Filter 307 and the High-Pass Filter 308 forming a band pass filter for filtering out out-of-band noise.

In some exemplary implementations, as shown in FIG. 8, in the signal receive link, the receiving mixer 303 may be a real number mixer, and the analog-to-digital converter 304 may be a real number analog-to-digital converter.

In the embodiments of the present disclosure, although the signal transmit link uses the digital phase shift architecture, the signal receive link may include a receiver with an orthogonal receive architecture or a receiver with a non-orthogonal receive architecture, so that sensors of the receive links in various architectures can be effectively compatible with each other, and development costs of entire transceiving link system can be effectively reduced.

In some other exemplary implementations, as shown in FIG. 9, in the signal receive link, the receiving mixer 303 may be a quadrature mixer, and the analog-to-digital converter 304 may be a quadrature analog-to-digital converter.

In order to match the signal transmit link with the digital phase shifter architecture, the receiving mixer 303 in the signal receive link in the embodiment of the present disclosure is adjusted to an IQ demodulator, and the analog-to-digital converter 304 is adjusted to an IQ ADC, and the echo signal received by the receive antenna is sequentially processed by the low noise amplifier 306, the receiving mixer 303, the low-pass filter 307, the high-pass filter 308 and the analog-to-digital converter 304, and then converted into an IQ digital baseband signal, and the IQ digital baseband signal is processed by the subsequent receiving baseband digital module 305 to obtain parameter information such as distance, velocity, angle, altitude and micro-motion characteristics (i.e., micro-Doppler) of the target.

When the receiving mixer 303 is a quadrature mixer and the receiving local oscillator signal is a sweep signal, the receiving local oscillator signal RX_LO may be expressed as:

$$RLO^a(t) = e^{j2\pi (f_{rlo}t + \frac{\alpha}{2}t^2) + \Phi_0}(11)$$

In some other exemplary implementations, the receiving local oscillator signal of the signal receive link may be a single-tone signal shown in formula (12) or formula (13), in addition to the sweep signal shown in formula (9) or formula (11).

The receiving mixer 303 is a real number mixer: $RLO(t) = \cos(2\pi f_{rlo}t + \Phi_0) \quad (12)$

The receiving mixer 303 is a quadrature mixer: $RLO^a(t) = e^{j2\pi f_{rlo}t + \Phi_0} \quad (13)$

When the receiving local oscillator signal is the single-tone signal, it is only needed to add a signal processing flow in the digital domain (including a mixing operation in the digital domain) to the receiving baseband digital module 305, and a required digital baseband signal can also be obtained.

Overall, based on different combinations of transmission solutions and reception solutions (e.g. whether the transmission digital baseband signal is a single-tone signal and the local oscillator signal is a sweep signal, or the transmission digital baseband signal is a sweep signal and the local oscillator signal is a single-tone signal; whether the receiving mixer is a real number mixer and the receiving analog-to-digital converter is a real number analog-to-digital converter, or the receiving mixer is a quadrature mixer and the receiving analog-to-digital converter is a quadrature analog-to-digital converter; whether the receiving local oscillator signal is a single-tone local oscillator signal or a sweep local oscillator signal), solutions in the embodiments of the present disclosure can be extended to a variety of system-level technical solutions.

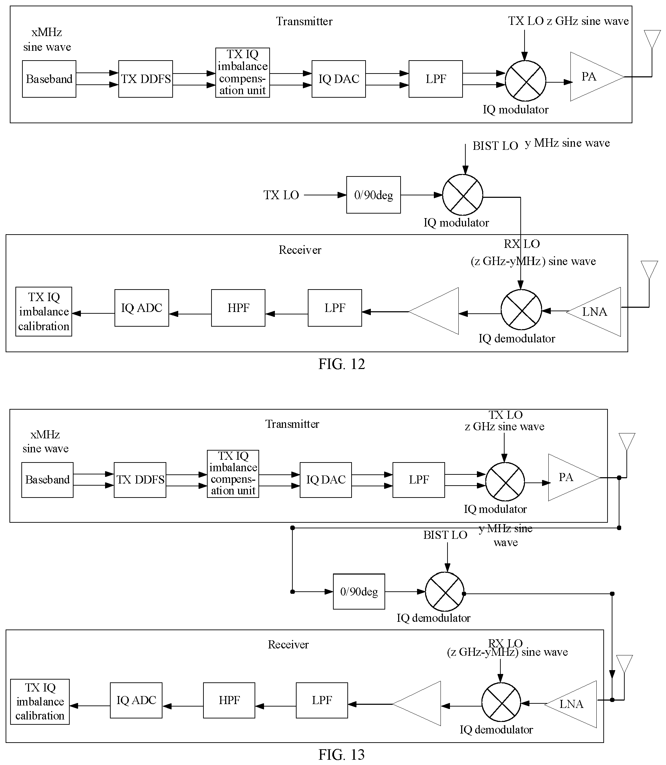

FIG. 10 is a schematic diagram of another transceiving link according to an embodiment of the present disclosure, FIG. 11 is a schematic diagram of a transceiving link including a TX IQ Mod, an RX IQ De-Mod, and an LO Freq Diff according to an embodiment of the present disclosure, FIG. 12 is a schematic diagram of a transceiving link based on the structure shown in FIG. 11 and combined with a BIST according to an embodiment of the present disclosure, and FIG. 13 is a schematic diagram of a transceiving link including a TX IQ Mod, a BIST IQ Mod, and an RX IQ De-Mod according to an embodiment of the present disclosure.

Hereinafter, based on the transmit link structure described in the embodiments of the present disclosure, a transceiving link formed by the transmit link structure will be described.

As shown in FIG. 10, a transceiving link may include a transmit link, a receive link, and the like. The transmit link (i.e., the transmitter) may include a digital baseband signal source (baseband), a direct digital frequency synthesizer (TX DDFS), an IQ digital-to-analog converter (IQ DAC), a Low-Pass Filter (LPF), an IQ modulator, and a Power Amplifier (PA), which are connected in sequence. A signal amplified by the power amplifier is radiated to a preset spatial area through a transmit antenna. The receive link may include a Low Noise Amplifier (LNA), a real mixer, a Trans-Impedance Amplifier (TIA), a Low-Pass filter (LPF), a High-Pass Filter (HPF), a real Analog-to-Digital Converter, etc. That is, the echo signal received by the receive antenna is processed by the LNA, real Mixer, TIA, LPF, HPF and real ADC sequentially, and then converted into a real number baseband signal that is processed by a subsequent digital signal processing module to obtain parameter information such as distance, speed, angle, height and micro-motion characteristics of the target.

In the transceiving link, a frequency of a TX-LO signal received by the IQ modulator in the transmit link may be the same as a frequency of an RX-LO signal received by the real mixer in the receive link. For example, as shown in FIG. 10, if the Baseband outputs a sine wave in x MHz, both the TX-LO signal and the RX-LO signal may be sine waves in z GHz.

In the embodiment shown in FIG. 10, the transmit link uses a digital phase shift architecture, and the receive link may be components in an analog architecture. That is, components of an IQ are not used. Therefore, sensors of the receive link in the analog architecture can be effectively compatible, and development costs of the entire transceiving link system can be effectively reduced.

Alternatively, in an embodiment of the present application, the receive link may include a receive antenna. That is, the receive antenna may be connected through a peripheral port of the chip, and formed on a carrier, such as a PCB board. Besides, in some alternative embodiments, the receive antenna may be integrated on a package of the chip to form an AiP or an AoP, which is a chip structure with a packaged antenna.

In some alternative embodiments, in order to match a transmit link in a digital phase shifter architecture, relevant adjustments may be made to the receive link correspondingly. For example, a transceiving link shown in FIG. 11 may include similar transmit link architecture and receive link based on those in FIG. 10 (the same parts will not be specifically described here for brevity). The real mixer in FIG. 10 is replaced with an IQ demodulator, and the real ADC is replaced with an IQ ADC. That is, the receive link may include a Low Noise Amplifier (LNA), the IQ demodulator, a Trans-Impedance Amplifier (TIA), a Low-Pass Filter (LPF), a High-Pass Filter (HPF), and an IQ Digital-to-Analog Converter (IQ ADC) connected in sequence. That is, an echo signal received by a receive antenna is sequentially processed by the LNA, IQ demodulator, TIA, LPF, HPF and IQ ADC, converted to an IQ digital baseband signal and the IQ digital baseband signal is processed by a subsequent digital signal processing module to obtain parameter information such as distance, velocity, angle, altitude and micro-motion characteristics (i.e. micro-Doppler) of the target.

Besides, when the transceiving link shown in FIG. 11 performing self-calibration, as long as a signal output port of the transmit link and a signal input port of the receive link are directly connected through a transmission line (i.e., a transmitted signal from the transmit link is directly transmitted to the receive link through the transmission line, without passing through the transmit antenna and the receive antenna), a self-calibration operation of the receive link and/or transmit link is implemented. In this case, there is a frequency offset between the TX-LO signal received by the IQ modulator in the transmit link and the RX-LO signal received by the IQ demodulator in the receive link. For example, as shown in FIG. 11, if the signal output by the Baseband is a sine wave in x MHz, the TX-LO signal may be a sine wave in z GHz. In this case, the RX-LO signal is converted to a digital signal after passing through a down-conversion mixer (i.e., the IQ demodulator in the receive link), the low-pass filter, and the high-pass filter, so as to perform TX IQ imbalance calibration.

In some alternative embodiments, as shown in FIG. 11, a transmit link (shown as a transmitter (TX)) may be calibrated by adding the receive link (shown as a receiver (RX)), and a TX IQ imbalance compensation unit in the transmit link performs a compensation operation based on calibrated data. Besides, the transmit link (shown as the transmitter (TX)) can be calibrated by reusing the receive link (shown as the receiver (RX)) actually used for signal transmission and reception, and the TX IQ imbalance compensation unit in the transmit link and/or the receive link can perform compensation operation based on the calibrated data. FIG. 11 is a signal link for TX IQ imbalance. Because an operation principle of the signal link for a TX harmonic signal problem is similar to an operation principle of the signal link for the TX IQ imbalance, the TX IQ imbalance compensation unit in FIG. 11 may be replaced with a TX HD3 compensation unit for solving a TX HD3 problem. Similar implementations may be carried out in other embodiments, which will not be described later for brevity.

In some alternative embodiments, based on the structure shown in FIG. 11, a Built-In Self-Test (BIST) module is provided at an RX-LO port of the IQ demodulator of the receive link shown in FIG. 11 to calibrate the transceiving link accurately. That is, as shown in FIG. 12, an IQ BIST architecture is provided at the RX-LO port of the IQ demodulator of the receive link based on the transceiving link structure shown in FIG. 11, so that an LO signal having a preset frequency offset is input to the RX-LO port of the receive link. For example, an IQ BIST is formed by a phase angle converter and the IQ modulator. A received signal (such as the TX-LO signal) is passed through the IQ modulator after passing through the phase angle converter, to form the signal having the frequency offset based on a frequency offset signal of another input signal BIST-LO of the IQ modulator, and the signal having the frequency offset is input to the RX-LO port of the IQ demodulator. For example, if the TX-LO signal is a sine wave in z GHz and the BIST-LO signal is a sine wave in y MHz, the signal having the frequency offset input to the RX-LO port of the IQ demodulator equals to (z GHz - y MHz). It should be noted that, in different embodiments, all of x, y, and z are schematic values, specific numerical values of which may be the same or different.

In some alternative embodiments, based on the IQ BIST architecture of the transceiving link structure shown in FIG. 12, the transmit link in the digital phase shifter architecture can be calibrated by reusing the receive link in the transceiving link. In other embodiments, both a calibration operation of the transmit link by the receive link and a calibration operation of the receive link by the transmit link may be implemented by reusing a corresponding receive link or transmit link in a link that actually transmits and receives signals, or may be implemented by adding a corresponding calibration receive link or calibration transmit link to perform a calibration operation for a corresponding transmit link or receive link in a link that actually transmits and receives signals .

Alternatively, the IQ BIST may include a phase angle converter and an IQ modulator, wherein the phase angle converter is used to calibrate the I-channel and Q-channel in the transmit link of the digital architecture, respectively, and the other input signal BIST-LO of the IQ modulator may be a sine wave of y MHz, used to simulate characteristics related to the echo signal formed by the transmitted signal reflected from the target, wherein all of x, y, and z in FIG. 12 are positive numbers, $x \neq y \neq z$ and, generally may be between 0 and 1000.

Alternatively, in the transceiving link shown in FIG. 12, a TX IQ imbalance compensation unit may be further provided in the transmit link (e.g. between the TX DDFS and the IQ DAC), and/or a TX IQ imbalance compensation unit may be further provided in the receive link (e.g. following the real ADC). That is, the transmitted and/or received signal may be compensated based on calibration parameters (or coefficients) derived from the self-calibration operations to solve problems such as the IQ imbalance.

In some alternative embodiments, based on the structure shown in FIG. 12, the IQ BIST module may be disposed between the signal output port of the transmit link and the signal input port of the receive link, as shown in FIG. 13. That is, the transmit link directly transmits the transmitted signal to the receive link through the IQ BIST module, so as to implement the self-calibration operation of the receive link and/or the transmit link without passing through the transmit antenna or the receive antenna.

It should be noted that, in the transmit link structure shown in FIGs. 11 to 13, only the IQ compensation unit (such as TX IQ imbalance compensation) is exemplified. In practice, an LO leakage compensation unit (TX LO leakage compensation unit), an HD3 compensation unit (TX HD3 compensation unit), and the like may be added to the transmit link as needed. Therefore, a compensation unit (TX compensation) may be formed by units, such as the LO compensation unit (TX LO leakage compensation unit), the IQ compensation unit (TX IQ imbalance compensation unit), and/or the HD3 compensation unit (TX HD3 compensation unit).

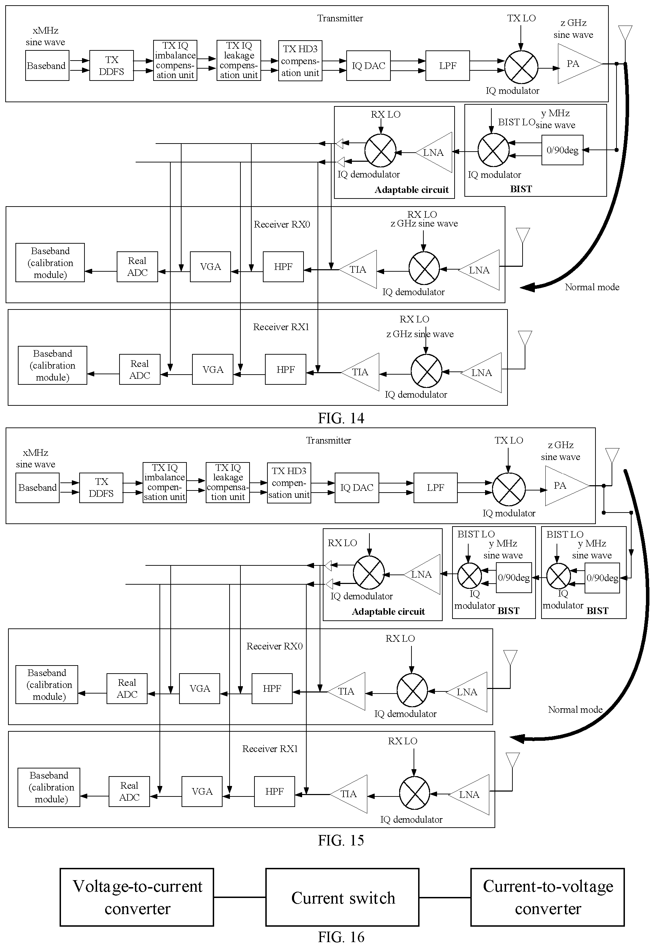

FIG. 14 is a schematic diagram of a transceiving link including an auxiliary circuit and a BIST IQ Mod according to an embodiment of the present disclosure, and FIG. 15 is a schematic diagram of another transceiving link including an auxiliary circuit and a BIST IQ Mod according to an embodiment of the present disclosure.

As shown in FIG. 14, a transceiving link may include a transmit link, a receive link and a calibration link, in conjunction with the structure and related description shown in FIGs. 9 and 13. The transmit link may include a TX digital baseband signal source (TX Baseband), a Direct Digital Frequency Synthesizer (TX DDFS), a compensation unit, an IQ Digital-to-Analog Converter (IQ DAC), a Low-Pass Filter (LPF), an IQ modulator and a Power Amplifier (PA), which are connected in sequence. A signal amplified by the power amplifier is radiated to a preset spatial area through a transmit antenna. The receive link may include a Low Noise Amplifier (LNA), a real mixer, a Trans-Impedance Amplifier (TIA), a High-Pass Filter (HPF), a Variable Gain Amplifier (VGA), a real Digital-to-Analog Converter (Real ADC) and an RX baseband for TXRF calibration , which are connected in sequence. That is, after sequentially processed by the LNA, Real mixer, TIA, HPF, VGA, and Real ADC, an echo signal received by a receive antenna is converted to a real digital baseband signal, and then the real digital based band signal is processed by a subsequent digital signal processing module to obtain target parameter information such as distance, speed, angle, height and micro-motion characteristics.

For the transmit link, a compensation unit (TX compensation) provided between TX DDFS and IQ DAC may include an LO compensation unit (TX LO leakage compensation), an IQ compensation unit (TX IQ imbalance compensation) and an HD3 compensation unit (TX HD3 compensation), which may be used to implement compensation operations corresponding to LO leakage, IQ imbalance and HD3 in the transmit link in the digital phase shifter architecture.

In some alternative embodiments, a calibration module may be further provided between the transmit link and the receive link, and the calibration compensation unit may be configured to reuse the receive link to perform operations, such as calibration for the transmit link in the digital phase shifter architecture described above. In this case, the compensation unit can implement a compensation operation to the transmitted signal at the transmit link based on parameters or coefficients acquired by the calibration operation of the calibration module. In another embodiment, a corresponding reception compensation unit may be provided in the receive link simultaneously or independently. That is, at that time, the reception compensation unit may implement compensation for the echo signal at the receive link based on parameters or coefficients acquired by the calibration operation.

As shown in FIG. 14, the calibration module above may include a BIST unit and an auxiliary circuit unit. That is, an output port of the transmit link is connected to any node between the real mixer and the real ADC in the receive link through the BIST unit and the auxiliary circuit unit. For example, after the IQ modulator in the transmit link generates a radio frequency signal in (z GHz $\pm$ x MHz) based on a digital phase-shifted baseband signal in x MHz and an LO signal in z GHz, the radio frequency signal is output to the BIST unit through the output port. The BIST unit performs a frequency offset operation of y MHz on the received radio frequency signal to obtain an analog echo signal in (z GHz $\pm$ x MHz $\pm$ y MHz), and then uses an IQ demodulator in the auxiliary circuit unit to reduce the frequency of the analog echo signal to obtain a preset intermediate frequency signal in (z GHz $\pm$ x MHz $\pm$ y MHz - z GHz = $\pm$ x MHz $\pm$ y MHz). The intermediate frequency signal is input to a preset node in the receive link to calibrate the transmit link.

Alternatively, the auxiliary circuit unit may be a quadrature demodulator circuit, and an output terminal of the auxiliary circuit unit may be connected to any one of a node between TIA and HPF, a node between HPF and VGA, and a node between VGA and real ADC in the receive link. In addition, in order to reuse a structure of the receive link to the most extent, after an output port of a transmit link passing through the BIST unit and the auxiliary circuit unit, two channels (i.e., an I-channel and a Q-channel) may be connected to different transmit links, respectively. That is, as shown in FIG. 14, one-way transmit link is calibrated by reusing two receive links. After the calibration of the transmit link is completed, the LO compensation unit (TX LO leakage compensation), the IQ compensation unit (TX IQ imbalance compensation) and/or the HD3 compensation unit (TX HD3 compensation) in the compensation module (TX compensation) may be used to perform compensation operations corresponding to problems, such as LO leakage, IQ imbalance and HD3 in the transmit link in the digital phase shifter architecture, based on the parameters obtained by the calibration.

In some alternative embodiments, the BIST unit described above may include a phase angle converter and the IQ modulator connected in sequence, and the auxiliary circuit unit may include the LNA, the IQ demodulator and the TIA connected in sequence. That is, the phase angle converter receives the radio frequency signal output from the transmit link, one input terminal of the IQ modulator is connected to an output terminal of the phase angle converter, and the other input terminal receives a BIST-LO signal in y MHz to generate a preset echo signal. The LNA amplifies the received echo signal and the amplified echo signal is then transmitted to one input terminal of the IQ demodulator. The other input terminal of the IQ demodulator is used to receive an RX-LO signal in z GHz. Two output channels (i.e., an I-channel and a Q-channel) of the IQ demodulator are connected to corresponding nodes in the corresponding receive links through TIA, so as to output the generated preset intermediate frequency signal to the two receive links, so as to reuse the receive link more efficiently while the calibration operation is being implemented.

It should be noted that, in the calibration operation in the embodiment of the present disclosure, if the transmit link transmits a sweep signal, in the actual calibration operation, the TX LO signal may be a single-tone signal for calibration in points. Besides, a sweep signal may also be used as the TX LO signal for large bandwidth calibration operation. Furthermore, and sweep bandwidth calibration can be used to implement the calibration operation to a sweep signal in a whole band at one time.

Based on the structure shown in FIG. 14, at least two cascaded BIST units can be used to suppress HD3, LO leakage and IQ imbalance of the transmit link in the digital phase shifter architecture to a preset degree. As shown in FIG. 15, in virtue of the two BIST units connected in series, noise caused by above-mentioned defects can be suppressed to -50 dB, thereby effectively reducing the difficulty of developing and designing related link analog devices.

In some alternative embodiments, based on the transmit link in the digital phase shifter architecture described in the embodiments of the present application, when calibrating and compensating the IQ imbalance, a compensation coefficient for the IQ imbalance may be obtained in a time domain based on spectrum analysis, or the compensation coefficient for the IQ imbalance may be obtained based on a spectrum peak ratio in a frequency domain.

In some alternative embodiments, in order to further improve accuracy of the compensation coefficient for the IQ imbalance, an ideal compensation coefficient may be approximated by iterative calibration and compensation, or the ideal compensation coefficient may be obtained by multi-observation calibration and compensation.

For example, in the method of iterative calibration and compensation, based on either a magnitude relationship between compensation coefficients of two adjacent calibration compensations, or whether a difference between the compensation coefficients of the two calibration compensations satisfies a preset iteration condition, whether to stop the iterative operation may be determined. A compensation coefficient, which is obtained when the iterative operation is stopped, acts as a final compensation coefficient in the current condition to perform subsequent operations. For the method of multi-observation calibration and compensation, after a plurality of calibration and compensation operations (for example, three times), Fast Fourier Transform (FFT) can be performed on measurement data obtained in each operation respectively to obtain corresponding amplitude and phase information. The measurement data can be differentiated and normalized to obtain relevant data that form an observation matrix. Subsequently, a corresponding compensation coefficient is solved based on the data obtained by inverting the observation matrix.

In some alternative embodiments, based on an idea similar to an idea for obtaining the compensation coefficient for IQ imbalance described above, a compensation coefficient for LO leakage and/or HD3 may be obtained by iterative calibration and compensation, or by the method of multi-observation calibration and compensation.

In the above-mentioned examples of the transmitter with the compensation unit, how to solve the problem of harmonic distortion in the transmitter has been discussed. Study shows that some harmonic distortion may come from devices with nonlinear characteristics in the transmitter, such as the mixer.

FIG. 16 is a schematic diagram of a structure of the mixer 421 provided in the embodiment of the present disclosure, which is illustrated as an example. As shown in FIG. 16, the mixer 421 includes a voltage-to-current converter (V/I converter), a current switch, and a current-to-voltage converter (I/V converter). The voltage-to-current converter converts a received voltage signal into a current signal. A current switch is connected with the voltage-to-current converter and a second signal generator, and is used to process a current signal output by the voltage-to-current converter by using a local oscillator signal. The current-to-voltage converter is connected with the current switch, and is used to convert a current signal output by the current switch to a voltage signal.

In the above-mentioned configuration, because the voltage-to-current converter is provided with a transistor amplifier, a harmonic signal corresponding to a baseband signal is present in the current signal output by the voltage-to-current converter based on a nonlinear characteristic of the transistor amplifier and a low frequency characteristic of the baseband signal. HD caused by third-order nonlinearity of the baseband can be simply referred to as HD3. Similarly, a harmonic caused by fifth-order nonlinearity is referred to as HD5. When the current switch processes the current signal output by the voltage-to-current converter, a frequency of the harmonic is converted to a radio frequency band after up-conversion processing. Due to high operation complexity of suppressing a harmonic signal in the radio frequency band, a hardware cost is high. If the harmonic signal in the frequency radio band is not removed, signal qualities of signals transmitted or received by a radar are affected, and then radar measurement accuracy is affected.

The compensation unit is configured to input a generated cancellation signal to the signal transmit link to cancel out the harmonic signal in the radio frequency signal. The compensation unit and a first signal generator are independent of each other.

For this purpose, the compensation unit may include a cancellation signal generator. The cancellation signal output by the compensation unit can suppress the harmonic signal in the radio frequency signal and reduce a harmonic component in the radio frequency signal, thereby improving a signal quality of the radio frequency signal output by the transmitter.

According to an embodiment of the present disclosure, for the harmonic signal in the signal transmit link, using feedback or according to the characteristics of transmitted wave, the compensation unit inputs the generated cancellation signal to the signal transmit link, to cancel out the harmonic signal in the radio frequency signal output by the signal transmit link. The cancellation signal has characteristics of opposite phase and similar amplitude to a harmonic signal transmitted in a radio frequency transmitting circuit, so as to achieve the purpose of suppressing the harmonic signal.

In some examples, the compensation unit generates a compensation signal with a cancellation effect according to parameters such as the phase, frequency, or amplitude of the baseband signal generated by the first signal generator, or even a length of a path combined with the LO signal.

For example, an example of a transmitter in which a compensation unit is added to the signal transmit link is shown in FIG. 5. In the structure shown in FIG. 5, the compensation unit is a TX compensation unit. The TX compensation unit includes a cancellation signal generator (not shown) that can generate a cancellation signal according to the characteristics of the transmitted wave. A TX HD3 compensation unit as shown in FIG. 6 may be taken as an example of the cancellation signal generator.

The baseband processor (referred to as a block "baseband" for short in FIG. 5) controls the quadrature digital baseband signal generated by the TX DDFS, and the TX compensation unit generates a quadrature compensation signal according to parameters of the quadrature digital signal, and sends the quadrature compensation signal and the quadrature digital signal together to the IQ DAC for conversion to an analog baseband signal. After a filtering process of the LPF, the analog baseband signal is transmitted to the mixer and mixed in the mixer (i.e., the IQ modulator in FIG. 5) to obtain a radio frequency signal mixed based on the TX LO signal and the analog baseband signal. The PA amplifies the mixed signal and outputs the amplified mixed signal through the transmit antenna. The compensation signal cancels out at least part of the harmonic signal in the radio frequency transmitting circuit, such as an HD3 harmonic signal. Therefore, clutter in the transmitted radio frequency signal will be greatly reduced. The radio frequency signal may be an FMCW signal.

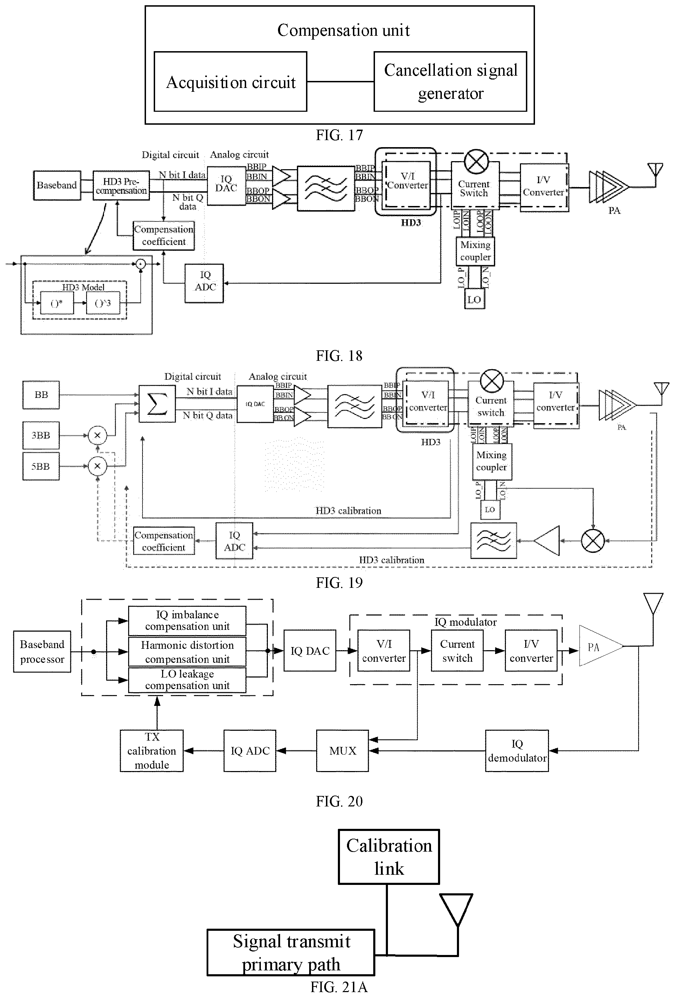

In some other examples, the compensation unit generates a compensation signal based on harmonic information fed back by the radio frequency transmitting circuit. Referring to FIG. 17, FIG. 17 is a schematic diagram of a structure of the compensation unit in the transmitter shown in FIG. 5. As shown in FIG. 17, the compensation unit includes an acquisition circuit and a cancellation signal generator.

The acquisition circuit is coupled with the radio frequency transmitting circuit, and used to acquire a signal in the radio frequency transmitting circuit to obtain an acquired signal. The acquired signal (or sampling signal) can indicate waveform information (also referred to as harmonic parameters) in the harmonic signal, such as a phase of a fundamental frequency signal, a phase of the harmonic signal, a frequency of the harmonic signal, a frequency of the fundamental frequency signal, a power of the harmonic signal, a power of the fundamental frequency signal, etc.

It should be noted that the harmonic parameters indicated by the acquired signal is related to information carried by a signal that can be acquired by the acquisition circuit. For example, if the acquisition circuit is a power acquisition circuit, a corresponding acquired signal contains the power of the fundamental frequency signal. For another example, the acquisition circuit uses at least part of a circuit of the receiver, the acquired signal reflects the phase of the fundamental frequency signal, the phase of the harmonic signal, the frequency of the harmonic signal, the frequency of the fundamental frequency signal, the power of the harmonic signal, the power of the fundamental frequency signal, and the like.

At least one of the harmonic parameters may be extracted by an analog circuit. For example, the power of the fundamental frequency signal is output by a coupler and a power detector. Alternatively, the harmonic parameters are extracted by taking advantages of digital circuits in a radar chip to frequency domain calculation. For example, by coupling the radio frequency transmitting circuit, a signal identical to the signal transmitted at a coupling point is acquired as the acquired signal. The acquired signal carries the fundamental frequency signal and the harmonic signal. The acquired signal is converted to a digital signal by the ADC, and then calculated by the digital circuit in the frequency domain to obtain more harmonic parameters.

In one implementation, an input terminal of the acquisition circuit is connected with an output terminal or signal detection terminal of the mixer. This method can detect the harmonic signal generated by the voltage-to-current converter, and the acquisition circuit is simplified. For example, according to a connection mode of a structure shown in FIGs. 18 and 19, an input terminal of an acquisition circuit is connected to a detection terminal between a voltage-to-current converter and a current switch, and is coupled to an ADC.

In another connection mode, the input terminal of the acquisition circuit is connected to a radio frequency output terminal or a radio frequency detection terminal of a radio frequency transmitting circuit. The radio frequency output terminal is an output terminal of the radio frequency transmitting circuit, for example. The radio frequency detection terminal is an input terminal or an output terminal of at least one level of PA in the radio frequency transmitting circuit, for example. According to this connection mode, more accurate harmonic parameters in the radio frequency transmitting circuit can be collected, but the radio frequency transmitting circuit has a complicated circuit structure.

In some chips including a BIST module, the acquisition circuitry may acquire the acquired signal by some or all of circuits in the BIST module. For example, as shown in FIG. 19, the input terminal of the acquisition circuit is coupled to the radio frequency output terminal, the acquisition circuit includes a down-converter and a filter, etc. in turn, and is connected to an IQ ADC to output a digital acquired signal. The down-converter and filter can reuse the BIST module or the receiver.

The acquired signal is input to a cancellation signal generator. The cancellation signal generator is at least one circuit in the compensation unit. The cancellation signal generator is connected with the first signal generator, such that the signal received by the radio frequency transmitting circuit includes both the baseband signal and the cancellation signal.

For example, the cancellation signal generator includes the above-mentioned cancellation signal generator, and a digital circuit for extracting harmonic information. The digital circuitry for extracting the harmonic information can be independently configured, or at least partially shares a digital circuitry in the radar chip.

The digital circuit for extracting the harmonic information (e.g. a digital circuit for processing the beat frequency baseband signal in the radar chip) extracts harmonic information, such as a harmonic frequency, a fundamental frequency and a fundamental frequency power, and provides the harmonic information to the cancellation signal generator. The cancellation signal generator generates a cancellation signal according to received parameters.

For another example, the digital circuit for extracting the harmonic information extracts a fundamental frequency amplitude from the acquired signal, and calculates a harmonic amplitude according to a difference between the preset fundamental frequency amplitude and the harmonic amplitude. The cancellation signal generator generates a harmonic signal compensation signal according to the calculated harmonic amplitude and other preconfigured harmonic parameters. The preconfigured harmonic parameters can be calculated according to a sweep range, phase and the like of the fundamental frequency signal to be transmitted by the radar chip.

The cancellation signal generator of the cancellation signal generator may be configured independently of the first signal generator, or may be at least partially shared by the first signal generator. For example, the cancellation signal generated by the cancellation signal generator is input to the first signal generator, so that the baseband signal output by the first signal generator includes the cancellation signal. The cancellation signal generator may include a third-order harmonic generator and a fifth-order harmonic generator.

For another example, the compensation unit further includes an adder coupled to the cancellation signal generator and the first signal generator to combine the baseband signal generated by the first signal generator and the cancellation signal generated by the cancellation signal generator. In this embodiment, the cancellation signal includes a cancellation signal Signal_HD3 generated by the third-order harmonic generator that cancels the third-order harmonic, and a cancellation signal Signal_HD5 generated by the fifth-order harmonic generator that cancels the fifth-order harmonic. The cancellation signals Signal_HD3 and Signal_HD5 and the baseband signal generated by the first signal generator are combined by the adder and output to the radio frequency transmitting circuit.

Overall, examples of circuit in the transmitter, which pre-input a cancellation signal to the radio frequency transmitting circuit by a feedback method according to the present application, can ensure that a harmonic signal contained in the radio frequency signal transmitted by the chip is low enough in different environments.

In order to effectively suppress harmonic signals according to an actual operating environment of the chip when in use (e.g. in view of an influence of ambient temperature on semiconductor devices), a signal cancellation method for harmonic signals in the transmitter by using a feedback mechanism is further provided in the present application. The method includes acts 10 and 20.

In the act 10, an acquisition operation is performed on a signal in a signal transmit link to obtain an acquired signal, wherein the signal transmit link is used to generate a radio frequency signal for radar detection, and the radio frequency signal includes a harmonic signal.

In the act 20, the acquired signal is detected to generate a cancellation signal for cancelling out the harmonic signal, and the cancellation signal is output to the signal transmit link.

According to the method in the embodiment of the present application, the acquisition operation is performed on the signal in the signal transmit link to obtain the acquired signal, and the cancellation signal is generated using the acquired signal, and the cancellation signal is output to the signal transmit link, thereby using the cancellation signal to suppress the harmonic signal in the radio frequency signal, reducing a harmonic component in the radio frequency signal, improving a signal quality of the radio frequency signal output by the transmitter, and then improving a receiving performance of the receiver for the radio frequency signal.

Referring to FIGs. 11 to 20, an example of a transmitter and its operating process is shown below.

For example, FIG. 11 shows an example of using a feedback mechanism to extract harmonic information in a transmitter, so that a compensation unit generates a corresponding cancellation signal. In the structure shown in FIG. 11, the compensation unit including a TX HD3 compensation unit is taken as an example. The TX HD3 compensation unit generates a compensation signal according to waveform characteristics of a received signal. The feedback mechanism can be executed in a calibration mode of a radar chip to prevent a signal transmission power of the radar chip during normal detection from being weakened.

A baseband processor in the transmitter (shown as a block "baseband" in FIG. 11) controls a quadrature digital baseband signal generated by a TX DDFS, which is combined with a quadrature digital cancellation signal generated by the TX compensation unit and sent to an IQ DAC to be converted to an analog baseband signal. There is an analog cancellation signal in the analog baseband signal, which is used to cancel out harmonic signals in a transmit link. The analog baseband signal is processed by LPF filtering and enters a first mixer (i.e., an IQ modulator in FIG. 11). The first mixer uses a TX LO to mix a received filtered signal to obtain a radio frequency signal. The radio frequency signal is coupled and output to a TX HD3 calibration circuit (shown as a block "calibration" in FIG. 11) in the compensation unit through the receiver. The TX HD3 calibration circuit may be regarded as a digital circuit for extracting harmonic information.

In the receiver, the signal output by the transmitter is amplified by an LNA and then the amplified signal is output to a second mixer (i.e., an IQ demodulator in FIG. 11) to obtain a demodulated signal, the demodulated signal is transmitted to a trans-impedance amplifier for amplification processing, and then passes through an LPF and an HPF in sequence, and then passes through an IQ ADC in which an analog-to-digital conversion operation is performed, and is finally transmitted to the TX HD3 calibration circuit. The TX HD3 calibration circuit extracts harmonic information in the transmitter from a feedback signal, the harmonic information is converted to parameters needed to generate a cancellation signal by a superior controller, and the parameters are provided to the TX HD3 compensation unit. The harmonic information acquired by the TX HD3 calibration circuit includes, for example, one or more of the following parameters: an initial phase, a starting frequency, a cutoff frequency, a frequency change duration, a center frequency, and the like of the harmonic signal (or the fundamental frequency signal). The TX HD3 calibration unit or the superior controller determines parameters (such as the initial phase, a frequency of the cancellation signal, time delay, etc.) used for generating the cancellation signal in the compensation unit according to the harmonic information.

It should be noted that the cancellation operation to the harmonics (e.g. the third harmonic and/or the fifth harmonic) in each of the above-described examples may be determined according to the needs of the transmitter.

In some alternative embodiments, based on the transmit link in the digital phase shifter architecture described in the embodiment of the present application, when the calibration and compensation operations are performed for HD3, a main source for generating the HD3 in an active mixer is a nonlinear third-order harmonic of the V/I converter, which can be achieved by a compensation architecture based on a cubic module as shown in FIG. 18 or a compensation architecture based on a frequency tripling waveform generator as shown in FIG. 19.

FIG. 20 is a schematic diagram of calibration and compensation of a transmit link based on a digital phase shifter architecture according to an embodiment of the present disclosure. As shown in FIG. 20, based on related technical content of calibration and compensation operations for IQ imbalance, LO leakage, and HD3 in the embodiments of the present disclosure, the compensation operation for the IQ imbalance may be implemented by compensating a conjugate signal to the BB (baseband) signal to cancel out an image component, and the compensation operation is not affected by a calibration mode for the IQ imbalance. The compensation operation for the LO leakage may be implemented by adjusting two DC components (i.e. DC bias) of IQ. Similarly, a calibration method for the LO leakage has no impact on its compensation solution. For the HD3, the HD3 is mainly generated from third-order harmonic distortion in the quadrature mixer V/I converter, and harmonic distortion is affected by DC bias. When both LO leakage and HD3 of a transmit link need to be calibrated, the HD3 needs to be calibrated after the LO leakage is calibrated, so as to ensure an accurate performance of HD3 calibration.

In addition, compensation methods for HD3 based on a digital pre-compensation architecture based on a digital cubic module and a digital pre-compensation architecture based on a frequency multiplier waveform generator module may directly affect a subsequent calibration solution and a subsequent compensation process.

Specifically, in an alternative embodiment, for the digital pre-compensation architecture based on the digital cubic module, after the LO leakage is calibrated and compensated, an HD3 compensation coefficient that serves as a main source of HD3 issue is calibrated under a stable DC bias, an then the IQ imbalance is calibrated. After the IQ imbalance is compensated, the I-channel and the Q-channel of the IQ are pre-compensated according to an IQ imbalance respectively, then the third-order harmonic distortion is compensated according to the pre-compensation result.

In an alternative embodiment, for the digital pre-compensation architecture based on the frequency multiplier waveform generator module, an HD3 compensation coefficient can be obtained by calibration after the LO leakage is calibrated and compensated, and the IQ imbalance can be calibrated and compensated under a stable DC bias. Then based on a compensated result, the I-channel signal and the Q-channel signal are pre-compensated according to IQ Imbalance, respectively. And the third-order harmonic distortion is compensated according to the pre-compensation result for the I-channel signal and the Q-channel signal.

In another alternative embodiment, for the digital pre-compensation architecture based on the frequency multiplier waveform generator module, an HD3 compensation coefficient can be obtained by calibration after the LO leakage is calibrated and compensated, and the IQ imbalance can be calibrated and compensated under a stable DC bias; According to the compensated result, actual waveforms of two-way signals of I and Q and the HD3 compensation coefficient are calculated respectively, and frequency tripling waveform information and frequency quintupling waveform information that need to be pre-compensated are inversely calculated.

In another alternative embodiment, for the digital pre-compensation architecture based on the frequency multiplier waveform generator module, the LO leakage may be calibrated and compensated at first, the HD3 compensation coefficient and the IQ imbalance compensation coefficient can be calibrated simultaneously by observing in times (e.g. three times) , and then a compensation coefficient at an HD3 image position may be calibrated by further observing (e.g. twice); Finally, a frequency tripling coefficient and a frequency quintupling coefficient that need to be pre-compensated are inversely calculated according to the HD3 compensation coefficient and the compensation coefficient at the HD3 image position. It should be noted that the observation in the embodiment of the present disclosure is used to represent operations such as testing and comparison and analysis of different test results.

Referring to the structure shown in FIG. 20, the acquisition circuit has two acquisition branches that can be dynamically switched, wherein an input end of an acquisition branch is connected between a voltage-to-current converter and a current switch; an input end of the other acquisition branch is connected with an output end of a power amplifier, and this acquisition branch is provided with an IQ demodulator. In addition, in the structure shown in FIG. 20, the acquisition circuit is further provided with a multiplexer, wherein input terminals of the multiplexers are connected with output terminals of the two acquisition branches, respectively, and an output terminal is used to output the acquired signal.

In the structure shown in FIGs. 18 to 20, the acquired signal may be an analog signal. That is, an output terminal of the acquisition circuit is connected with the IQ ADC. Alternatively, the acquired signal may be a digital signal, and the acquisition circuit includes, at least, an IQ ADC.

It should be noted that when a radio frequency signal transmitted by a signal transmit link is not a quadrature signal, the acquisition circuit in FIGs. 18 to 20 can be achieved by non-quadrature components. For example, an IQ frequency decoder may be replaced with a single-ended down-conversion mixer, and the IQ ADC may be replaced with a single-ended analog-to-digital converter.

The calibration link according to the embodiments of the present application is described below.

In the calibration link shown in FIG. 7, the calibration link may calibrate a primary transmit path including an analog phase shifter (e.g., the signal transmit link shown in FIG. 1A), or a primary transmit path including a digital phase shifter (e.g., the signal transmit link shown in FIG. 4). In addition, in an embodiment of the present application, a primary receive path may further be calibrated.

Based on the above-mentioned description, a calibration link of a primary signal transmission path according to an embodiment of the present disclosure is specifically shown in FIG. 21A.

Referring to FIG. 21A, the primary signal transmission path is used to transmit electromagnetic wave signals, and the calibration link is integrated in an integrated circuit including the primary signal transmission path. Because the calibration link is integrated in the integrated circuit including the primary signal transmission path, the primary signal transmission path can be calibrated in real time, without an external device to perform a calibration operation on the primary signal transmission path.

The calibration link is connected, at least, between the primary signal transmission path and an antenna corresponding to the primary signal transmission path, so that the calibration link and the primary signal transmission path allow a signal transmission, and a calibration operation for the primary signal transmission path is enabled by a hardware structure.

Specifically, the calibration link may be configured to calibrate the primary signal transmission path to obtain calibration information.

In an embodiment of the present application, the primary signal transmission path may be a primary transmit path for transmitting a radio frequency signal, or a primary receive path for receiving an echo signal.

When the primary signal transmission path is the primary transmit path, the calibration link acquires, at least, a signal output from the primary signal transmission path, and performs a reception operation based on the signal output from the primary transmit path to obtain the calibration information. When the primary signal transmission path is the primary receive path, the calibration link outputs, at least, a signal to the primary receive path, and obtains calibration information based on a result of a signal output by the calibration link processed by the primary signal transmission path.

Correspondingly, the primary signal transmission path may be configured to perform a calibration operation based on the calibration information obtained by the calibration link, wherein the calibrated primary signal transmission path transmits an electromagnetic wave signal.

Because the primary signal transmission path performs the calibration operation based on the calibration information, a signal transmission quality of the primary signal transmission path can be effectively improved, thereby improving a signal quality of the electromagnetic wave signal transmitted by the calibrated primary signal transmission path.

Furthermore, because the calibration link is integrated in the integrated circuit including the primary signal transmission path, the calibration link can calibrate the primary signal transmission path in real time as needed. In addition, due to the highly similar operating environments (such as temperature, humidity, aging duration) of the calibration link and the primary signal transmission path, the calibration operation of the calibration link is highly consistent with the operating environment of the primary signal transmission path, so that the calibration link can obtain more accurate calibration information, thereby improving a signal processing performance of the primary signal transmission path.

The calibration link performs a calibration operation for the primary signal transmission path prior to shipment of the primary signal transmission path and/or after its official deployment of the primary signal transmission path.

The time prior to the shipment of integrated circuit includes the time of a mass-produced test of integrated circuit or the time of a mass-produced test of integrated circuit after the integrated circuit is integrated into a radio equipment.

During mass production testing, different operating environments of the primary signal transmission path can be simulated, and more general calibration information can be obtained by calibrating based on the operating environments.

In some alternative embodiments, before shipment from the integrated circuit manufacturer, the integrated circuit may be calibrated during mass production testing or during mass production testing after being integrated into a radio equipment, and the calibration information obtained by the calibration can be stored in a storage medium in advance. Later, the calibration information can be directly called to calibrate a transmitted signal when the radio equipment runs.

After the primary signal transmission path is officially deployed as a part of the radio equipment, the performance of the primary signal transmission path is affected to varying degrees due to certain differences in usage durations and operating environments of different radio equipment. Therefore, after the primary signal transmission path is officially deployed, the calibration link can be used to calibrate the primary signal transmission path.

Specifically, the calibration link may perform a calibration operation on the primary signal transmission path during a signal transmission interval of the primary signal transmission path. When the primary signal transmission path is the primary transmit path, the transmission signal interval may be to an idle duration between two adjacent transmission operations for the radio frequency signal. When the primary signal transmission path is the primary receive path, the transmission signal interval may be an idle duration between two adjacent reception operations for the echo signal.

In some alternative embodiments, the calibration link performs a calibration operation on the primary signal transmission path when a preset condition for initiating the calibration operation is satisfied.

Specifically, based on both an influence of changes in the operating environment of the integrated circuit on performance parameters of the integrated circuit and adverse effects such as device aging, conditions for initiating the calibration operation (e.g. a preset time (such as a preset time period such as an interval of 1 minute, 1 hour, or 1 day), which can be specifically set based on an application scenario, for example, when the influence of the changes in the environment is mainly considered, a shorter duration (such as 30 seconds, or an interval of each signal frame, etc.) can be set; and if device aging is considered, the duration can be set to 1 year, and unequal interval time segments can be set based on aging change parameters). Besides, conditions for initiating the calibration operation may be set based on changes in the external environment such as temperature, pressure, humidity, etc. For example, initiates once when the temperature rises by 5 °C, or initiates the calibration operation when the temperature reaches a preset value. Corresponding to parameters such as pressure and humidity, the conditions of initiating the calibration operation can be set separately or comprehensively (such as temperature reaching 80 °C and humidity reaching 70%, etc.). Besides, an operating condition of a current integrated circuits or electronic equipment can also be predicted or evaluated based on historical calibration data. Once a preset threshold is reached, operations such as warning and initiating safety functions can be directly performed.

For the primary signal transmission path, after each calibration operation is implemented by the calibration link, latest calibration information is used for the calibration operation, and the calibration operation is used for the signal transmission operation. That is, the calibration link compensates transmitted information in real time based on calibration information obtained by a previous calibration operation for the calibration link.

Because the latest calibration information obtained after each calibration operation of the calibration link can accurately reflect the calibration information of the primary signal transmission path in a current operating environment, the calibration operation by using the latest calibration information can ensure accuracy of the calibration information used by the primary signal transmission path, thus enabling signal transmission quality improvement of the primary signal transmission path.

In an exemplary embodiment, the signal transmitted by the calibration link is a single-tone signal. The single-tone signal, also referred to as a single-frequency signal, is a signal with only one constant frequency, which may be a sinusoidal signal or a cosine signal. The frequency of the single-tone signal may be set according to a circuit structure for receiving the single-tone signal.

While calibrating the primary signal transmission path, the single-tone signal is used as a calibration signal transmitted by the calibration link, which can reduce signal processing complexity of the calibration operation and improve calibration efficiency.

In addition, when the signal transmitted by the calibration link is a quadrature signal, the components of the calibration link are quadrature devices.

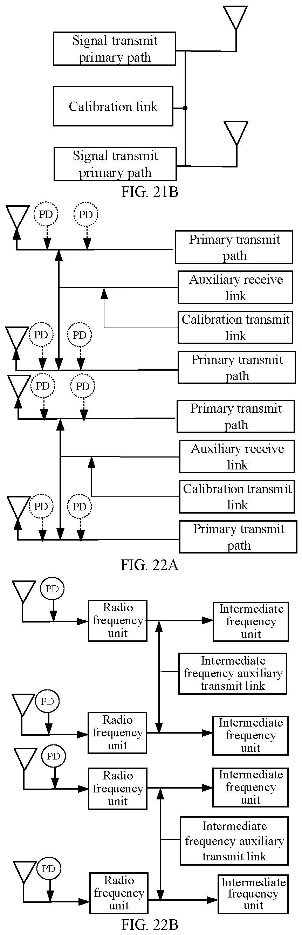

FIG. 21B is a schematic diagram of deployment of the calibration link shown in FIG. 21A. As shown in FIG. 21B, an integrated circuit is provided with at least two primary signal transmission paths. The at least two primary signal transmission paths are usually at least two primary paths with a same signal transmission function, for example, both are primary transmit paths or both are primary receive paths.

In integrated circuits, primary paths with a same signal transmission function are usually integrated and deployed in a same area in a circuit board, and there is a spacing between two adjacent primary paths.

Considering loss caused by a signal transmission distance and a signal transmission interference, a calibration link may be provided between two adjacent primary signal transmission paths with a same signal transmission function, so that the calibration link is connected with the two primary signal transmission paths, respectively. Similarly, at least one calibration link may be provided in the integrated circuit. Any calibration link may be configured to calibrate at least two of the primary signal transmission paths.

Furthermore, the electromagnetic wave signal may be a radar signal, and the primary signal transmission path includes a primary receive path for an echo signal and/or a primary transmit path for a radio frequency signal.

FIG. 22A is a schematic diagram of a connection between a calibration link and a primary transmit path according to an embodiment of the present disclosure. As illustrated in FIG. 22A, the calibration link correspondingly includes an auxiliary receive link corresponding to the primary transmit path, wherein the auxiliary receive link is connected between the primary transmit path and a corresponding transmit antenna, and may be configured to calibrate a radio frequency signal transmitted by the primary transmit path.

In an exemplary embodiment, the primary transmit path includes an intermediate frequency processing circuit and a radio frequency processing circuit, wherein the intermediate frequency processing circuit is configured to process a baseband signal to obtain an intermediate frequency signal, and the radio frequency processing circuit is used to process the intermediate frequency signal to obtain a radio frequency signal.

At first, the auxiliary receive link performs a calibration operation on the intermediate frequency processing circuit in the transmit unit, so that the intermediate frequency signal output by the calibrated intermediate frequency processing circuit is a calibrated signal, which improves a quality of the signal received by the radio frequency processing circuit and reduces an error generated in a calibration process of the input signal to the radio frequency processing circuit.

After the intermediate frequency processing circuit is calibrated, a calibration unit is used to calibrate the radio frequency processing circuit in the transmit unit. Because the signal output by the calibrated intermediate frequency processing circuit is used as an input signal to the radio frequency processing circuit, an influence of performance deviation of the intermediate frequency processing circuit on the calibration for the radio frequency processing circuit can be reduced, improving the accuracy of the calibration operation for the radio frequency processing circuit.

Furthermore, the calibration link further includes a calibration transmit link corresponding to the auxiliary receive link, wherein the calibration transmit link may be configured to perform the calibration operation on the auxiliary receive link. Correspondingly, the auxiliary transmit link performs a calibration operation based on calibration information obtained by calibrating the receive link, wherein the calibrated auxiliary receive link performs a calibration operation on the primary transmit path.

Using the calibration transmit link to calibrate the auxiliary receive link can improve a signal processing performance of the auxiliary receive link, and using the auxiliary receive link with the improved signal processing performance to calibrate the primary transmit path can improve an accuracy of the calibration operation for the primary transmit path.

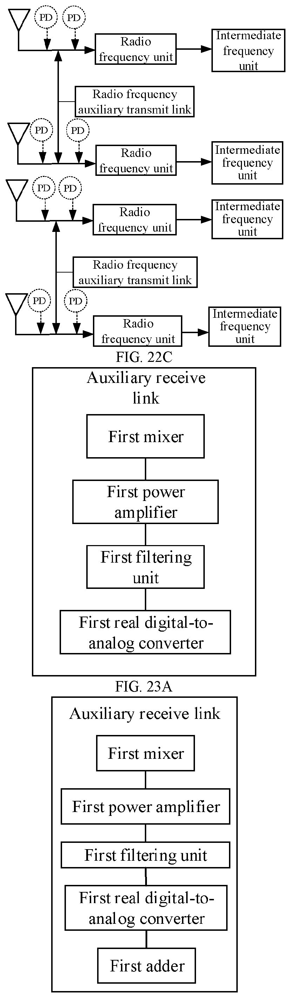

FIGs. 22B and 22C are schematic diagrams of a connection between a calibration link and a primary receive path according to an embodiment of the present disclosure. As shown in FIG. 22B, the calibration link correspondingly includes an auxiliary transmit link corresponding to the primary receive path.

The primary receive path includes a radio frequency unit and an intermediate frequency unit sequentially connected with the receive antenna, wherein the intermediate frequency unit is configured to perform intermediate frequency processing on the received signal and then output the processed signal to the radio frequency unit. The radio frequency unit is used to perform radio frequency processing on the signal output by the intermediate frequency unit and output a processed signal. The calibration link includes at least one of a radio frequency auxiliary transmit link and an intermediate frequency auxiliary transmit link.

Referring to FIG. 22B, the intermediate frequency auxiliary transmit link is connected to an intermediate frequency signal output terminal of the primary receive path, and may be configured to calibrate an intermediate frequency signal obtained by down-frequency processing an echo signal received by the primary receive path. The intermediate frequency unit may be configured to perform a calibration operation based on calibration information obtained by the intermediate frequency auxiliary transmit link, wherein the calibrated intermediate frequency unit performs signal processing on the signal output by the radio frequency unit.

Referring to FIG. 22B, the radio frequency auxiliary transmit link is connected between the primary receive path and a corresponding receive antenna, and may be configured to calibrate an echo signal received by the primary receive path. The radio frequency unit may be configured to perform a calibration operation based on the calibration information obtained by the radio frequency auxiliary transmit link, wherein the calibrated radio frequency unit performs signal processing on the echo signal received by the receive antenna.

If the auxiliary transmit link includes an intermediate frequency auxiliary transmit link and a radio frequency auxiliary transmit link, a calibration operation may be performed on the primary receive path according to the following acts, which may include: performing a calibration operation on the intermediate frequency unit by the intermediate frequency auxiliary transmit link; calibrating the radio frequency auxiliary transmit link by the calibrated intermediate frequency unit; and calibrating the radio frequency unit by the calibrated radio frequency auxiliary transmit link.

The radio frequency auxiliary transmit link being calibrated by the calibrated intermediate frequency unit can improve the signal processing performance of the radio frequency auxiliary transmit link. Using the radio frequency auxiliary transmit link with the improved signal processing performance to calibrate the radio frequency unit can improve an accuracy of a calibration operation for the radio frequency unit.

Alternatively, in FIGs. 22A, 22B, and 22C, a Power Detector (PD) may be further provided between the primary signal transmission path and the antenna, wherein the PD may be used to detect power information of the primary signal transmission path.

In FIGs. 22A and 22C, the calibration link may be connected between the PD and the primary signal transmission path, to perform the calibration operation on the primary signal transmission path. Alternatively, the calibration link may be connected between the PD and the antenna to perform calibration operations on the primary signal transmission path and the PD.

The calibration links are described below, respectively.

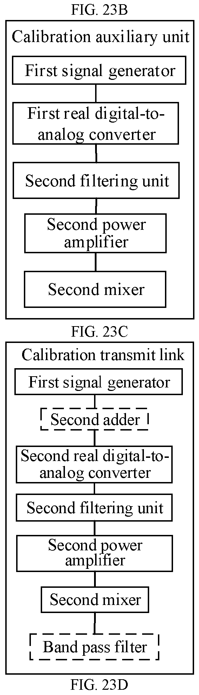

Each of FIGs. 23A, 23B, 23C and 23D is a schematic diagram of a structure of respective link in the calibration links corresponding to the primary transmit paths in the embodiments of the present disclosure.

FIG. 23A is a schematic diagram of a structure of the auxiliary receive link in FIG. 22A. As shown in FIG. 23A, the auxiliary receive link includes a first mixer, a first power amplifier, a first filtering unit and a first real digital-to-analog converter, wherein the first mixer may be configured to mix the received signal with a local oscillator signal used in the reception operation, the first power amplifier may be configured to amplify a signal output by the first mixer; the first filtering unit may be configured to perform filtering processing on the received signal to obtain a filtered signal, and the first real digital-to-analog converter may be configured to convert a digital filtered signal to an analog filtered signal.

A circuit formed by the first mixer and the first power amplifier is used to simulate a radio frequency processing function in a primary receive path for the echo signal. A circuit formed by a first filtering unit and a first real digital-to-analog converter is used to simulate an intermediate frequency processing function in a primary receive path for the echo signal. According to the signal transmission function, the above-mentioned auxiliary receive link can be used to form a receive link for the signal.

FIG. 23B is a schematic diagram of another structure of the auxiliary receive link in FIG. 23A. As shown in FIG. 23B, the auxiliary receive link further includes a first adder connected with the first real digital-analog converter, and the first adder may be configured to compensate a signal output by the first real digital-to-analog converter according to a leakage signal of the local oscillator signal used by the first mixer.

The first adder can compensate the signal output by the first real digital-to-analog converter to solve a leakage problem of the local oscillator signal used by the first mixer in the auxiliary transmit link, so as to ensure accuracy of the signal transmitted in the auxiliary receive link.

FIG. 23C is a schematic diagram of a structure of the calibration transmit link in FIG. 22A. As shown in FIG. 23C, the calibration transmit link includes a first signal generator, a second real digital-to-analog converter, a second filtering unit, a second power amplifier and a second mixer, wherein the first signal generator may be configured to output a digital raw signal, the second real digital-to-analog converter may be configured to convert the digital raw signal to an analog raw signal, the second filtering unit may be configured to perform filtering processing on the original signal to obtain a filtered signal, the second power amplifier may be configured to amplify the filtered signal to obtain an amplified signal, the second mixer may be configured to mix the amplified signal with a local oscillator signal used in a transmit operation.

A circuit formed by the first signal generator and the second real digital-to-analog converter is used to simulate an intermediate frequency processing function in the primary transmit path for the radio frequency signal, and a circuit formed by the second power amplifier and the second mixer is used to simulate a radio frequency processing function in the primary transmit path for the radio frequency signal. According to the signal transmission function, the above-mentioned auxiliary transmit link can also be used to form a receive link for the signal.

FIG. 23D is a schematic diagram of another structure of the calibration transmit link of FIG. 23C. As shown in FIG. 23D, the calibration transmit link further includes at least one of a second adder and a Band Pass Filter (BPF). The second adder is connected between the first signal generator and the second real digital-to-analog converter, and may be configured to compensate the signal output by the first signal generator according to a leakage signal of the local oscillator signal used by the second mixer. The band-pass filter is connected with the second mixer, and may be configured to filter a signal output by the second mixer and transmit the filtered signal to the calibration unit.

The first adder can compensate the signal output by the first signal generator to solve the leakage problem of the local oscillator signal in the calibration transmit link, so as to ensure accuracy of a signal output by the calibration transmit link.

The BPF may be configured to filter out a direct current signal generated by an LO leakage of the calibration transmit link. That is, the calibration auxiliary unit may be configured to generate a plurality of stable single-tone signals in different frequencies to perform calibration operations on the auxiliary receive link.

Because both the local oscillator signal used for the calibration transmit link and the local oscillator signal used for the auxiliary receive link use a same local oscillator signal generation circuit, there is a difference in frequencies of the local oscillator signal used for the calibration transmit link and the local oscillator signal used for the auxiliary receive link. For example, the difference value between the frequency of "RF Tone GEN LO" and the frequency of "calibration unit LO" is 5 MHz or 10 MHz.

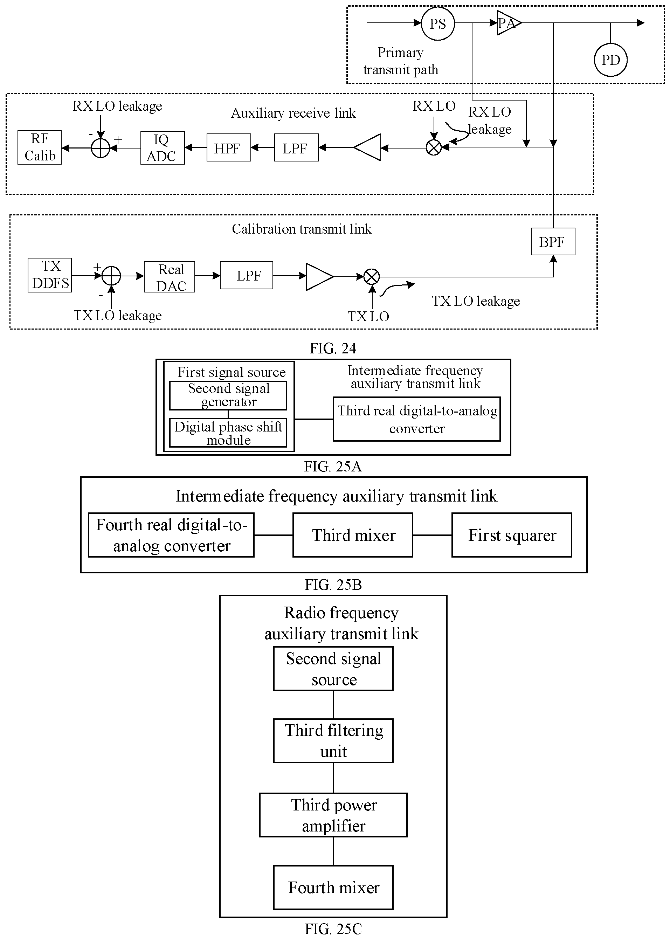

FIG. 24 is a schematic diagram of an application of a calibration link corresponding to a primary transmit path according to an embodiment of the present disclosure. As shown in FIG. 24, an auxiliary receive link may include a mixer, a TIA, an LPF, an HPF, an IQ ADC, an adder and an RF calibration module (RF Calib) connected in sequence. That is, a local oscillator signal is received at an input terminal of the mixer, and the other input terminal of the mixer is connected to a node preceding to a PD in the primary transmit path along a signal transmission direction (i.e., an arrow direction shown in the figure), or any node following a phase shifter (module). For example, the input terminal of the mixer is connected to an output terminal of a PA (to synchronously perform calibration on the PA), or the input terminal of the mixer is connected to an input terminal of the PA, such that a calibration operation is performed on a transmit path by a calibration unit. There is a set frequency difference between a frequency of a local oscillator signal in the primary transmit path and a frequency of the local oscillator signal in the auxiliary receive link, so that there is a staggering frequency between the two signals to simulate an actual transmitting and receiving signal loop.

In an alternative embodiment, in order to further improve the calibration accuracy, a corresponding calibration circuit (i.e., a calibration transmit link unit) may be further provided for the auxiliary receive link. For example, the calibration transmit link shown in FIG. 24 may include a TX DDFS, an adder, a real DAC, an LPF, an amplifier, a multiplier, and a Band Pass Filter (BPF) connected in sequence. The adder may be configured to perform calibration compensation for a TX LO leakage (such as a TX LO leakage waveform), the multiplier may be configured to compensate for the RF Tone Gen LO leakage, and the BPF may be configured to filter out a DC signal generated by the LO leakage of the calibration auxiliary unit. That is, the calibration auxiliary unit may be configured to generate a plurality of stable single-tone signals in different frequencies to perform calibration operations on the calibration unit.

In some alternative embodiments, as shown in FIG. 24, the auxiliary transmit link may be calibrated with the calibration transmit link at first, and then the calibrated auxiliary receive link unit may be used to calibrate a primary transmitter including the PA, e.g. to calibrate the devices and circuits such as PD at an output terminal of the PA, a phase shifter in the primary transmitter, a total gain and a frequency response output from the DAC to the PA, etc.

Specifically, as shown in FIG. 24, a plurality of stable single-tone signals with different frequencies can be generated with the calibration transmit link to calibrate the auxiliary receive link unit, and then problems such as IQ imbalance, local oscillator leakage, and frequency response inconsistency of the primary transmit path can be solved based on the calibrated auxiliary receive link calibrating the primary transmit path.

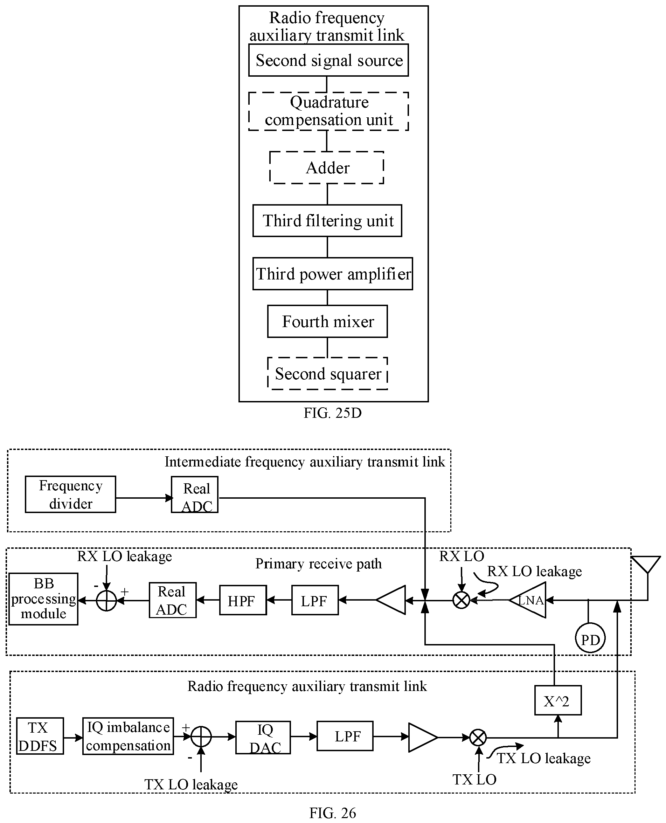

Each of FIGs. 25A, 25B, 25C and 25D is a schematic diagram of a structure of respective link in the calibration link corresponding to the primary receive path in the embodiment of the present disclosure.

FIG. 25A is a schematic diagram of a first structure of the intermediate frequency auxiliary transmit link in FIG. 22A. As shown in FIG. 25A, the intermediate frequency auxiliary transmit link includes a first signal source and a third real digital-to-analog converter, wherein the first signal source may be configured to output a digital intermediate frequency calibration signal, and the third real digital-to-analog converter may be configured to convert the digital intermediate frequency calibration signal to an analog intermediate frequency calibration signal. A frequency of the intermediate frequency calibration signal may be set according to a frequency of a signal received by an intermediate frequency unit.

Using the first signal source to generate the digital intermediate frequency calibration signal can improve a generation efficiency of the intermediate frequency calibration signal, and then the signal is converted by the third real digital-to-analog converter, so as to obtain a signal can be received by the intermediate frequency unit.

In an exemplary embodiment, the first signal source may perform frequency division processing on the received digital signal, wherein a frequency of the signal resulting from the frequency division processing is within a frequency range allowed by the intermediate frequency unit.

In another exemplary embodiment, the signal may be processed by a digital phase shifter, and the signal processed by the digital phase shifter serves as the intermediate frequency calibration signal. For example, referring to FIG. 25A, the first signal source includes a second signal generator and a digital phase shift module, wherein the second signal generator is configured to generate an initial signal, and the digital phase shift module is configured to perform frequency shift and/or phase shift on the initial signal using digital quadrature modulation.

FIG. 25B is a schematic diagram of a second structure of the intermediate frequency auxiliary transmit link in FIG. 22A. As shown in FIG. 25B, the intermediate frequency auxiliary transmit link includes a fourth real digital-to-analog converter, a third mixer and a first squarer, wherein the fourth real digital-to-analog converter may be configured to convert a preset digital signal to an analog signal, the third mixer may be configured to mix the signal output from the fourth real digital-to-analog converter with the local oscillator signal to obtain a mixed signal, and the first squarer may be configured to perform square processing on the mixed signal to obtain the intermediate frequency calibration signal. A quantity of the fourth real digital-to-analog converters may be one or at least two.

The third mixer is used to mix the local oscillator signal with the signal output by the fourth real digital-to-analog converter to obtain a mixed signal approximating to a single-tone signal, and then the first squarer performs the square processing on the mixed signal to obtain a single-tone signal that serves as the intermediate frequency calibration signal.

FIG. 25C is a schematic diagram of a structure of the radio frequency auxiliary transmit link in FIG. 22A. As shown in FIG. 25C, the radio frequency auxiliary transmit link includes a second signal source, a third filtering unit, a third power amplifier and a fourth mixer, wherein the second signal source may be configured to output a raw signal, the third filtering unit may be configured to perform filtering processing on the raw signal to obtain a filtered signal, the third power amplifier may be configured to amplify the filtered signal to obtain an amplified signal, and the fourth mixer may be configured to mix the amplified signal with a local oscillator signal to obtain a desired signal.

A circuit formed by the second signal source and the third filtering unit is used to process the intermediate frequency signal in the primary transmit path for the analog signal, and a circuit formed by the third power amplifier and the fourth mixer is used to process the radio frequency signal in the primary transmit path for the signal. According to the signal transmission function, the radio frequency auxiliary transmit link can serve as the transmit link for the signal.

In some exemplary embodiments, the second signal source can use a direct digital frequency synthesizer to generate a digital signal, which can improve a generation efficiency of the signal, and then convert the signal by the digital-to-analog converter to obtain the raw signal.

FIG. 25D is a schematic diagram of another structure of the radio frequency auxiliary transmit link shown in FIG. 25C. As shown in FIG. 25D, the radio frequency auxiliary transmit link includes at least one of a quadrature compensation unit, a second squarer and a third adder.

The quadrature compensation unit has a terminal connected with the second signal source and another terminal connected with the third filtering unit, and may be configured to compensate for quadrature imbalance of a received initial signal when the initial signal output by the second signal source is a quadrature signal. After the quadrature signal is output by the second signal source, by compensating for the quadrature imbalance of the quadrature signal, further deterioration of the quadrature imbalance in subsequent signal processing can be effectively avoided, and effectively ensuring the signal quality.

The second squarer is connected with a signal input terminal of the intermediate frequency unit, and may be configured to process the signal output by the fourth mixer, and to output the signal to the calibrated intermediate frequency unit. The second squarer can effectively remove a vestigial sideband problem of the signal output by the fourth mixer caused by the quadrature imbalance problem, and ensure the accuracy of the output signal, thereby allowing calibration for the radio frequency auxiliary transmit link.

The third adder has a terminal connected with the second signal source and another terminal connected with the third filtering unit, and may be configured to compensate the signal output from the second signal source according to a leakage signal of the local oscillator signal used by the fourth mixer. The third adder can compensate the signal output by the second signal source to solve the leakage problem of the local oscillator signal in the calibration transmit link, so as to ensure accuracy of a signal output by the radio frequency auxiliary transmit link.

FIG. 26 is a schematic diagram of an application of a calibration link corresponding to a primary receive path according to an embodiment of the present disclosure. As shown in FIG. 26, the primary receive path may include an LNA, a mixer, a TIA, an LPF, an HPF, a real ADC, an adder, and a baseband processing module (BB processor), which are sequentially connected to a receive antenna.

An intermediate frequency auxiliary transmit link may include a frequency divider and a real ADC connected in sequence, wherein an output terminal of the real ADC in the intermediate frequency auxiliary transmit link is connected with a signal input terminal of the TIA. A intermediate frequency auxiliary transmit link may include a TX DDFS, an IQ imbalance compensation module, an adder, an IQ DAC, an LPF, a TIA, and a mixer connected in sequence, wherein an output terminal of the mixer is switchablely connected between a PD and the receive antenna, alternatively, connected to the signal input terminal of the TIA.

In the structure shown in FIG. 26, the intermediate frequency auxiliary transmit link can be used to output the intermediate frequency calibration signal to implement the calibration for the intermediate frequency unit, and at least calibrate the baseband processing module and the real ADC in the primary receive path. Then the radio frequency auxiliary transmit link is used to output a signal to a signal output terminal of the TIA, a processing result of the signal by the baseband processing module is used to calibrate the radio frequency auxiliary transmit link, and at least calibrate the TX LO leakage and the IQ imbalance. Finally, the radio frequency auxiliary transmit link outputs a signal to a signal input terminal of the LNA in the primary receive path, and calibrates a RX LO leakage problem and an RX frequency response problem in the primary receive path. The radio frequency auxiliary transmit link may be configured to generate a plurality of stable single-tone signals in different frequencies to perform a calibration operation on a radio frequency unit in the primary receive path. An output terminal of the radio frequency auxiliary transmit link may be connected between the PD and the receive antenna, or to the signal input terminal of the LNA, thereby achieving auxiliary calibration to a total gain and a frequency response from the LNA to the real ADC and the PD at an input terminal of the LNA.

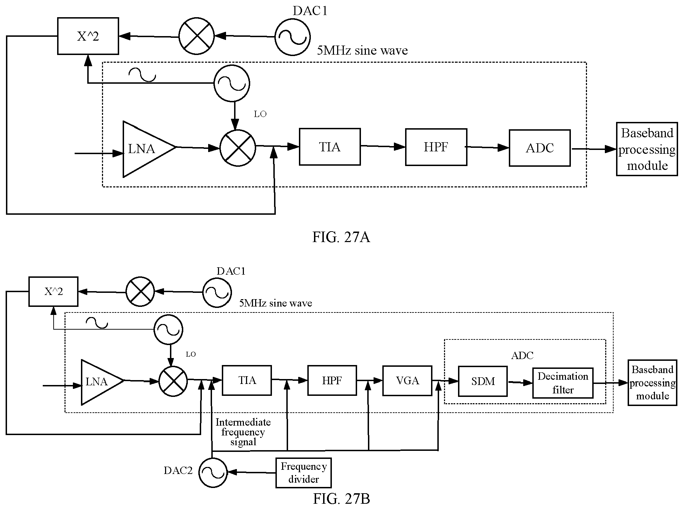

FIGs. 27A and 27B are schematic diagrams of applications of an intermediate frequency auxiliary transmit link according to an embodiment of the present disclosure. A difference between FIGs. 27A and 27B is that a quantity of DACs employed in FIG. 27A differs from a quantity of the DACs employed in and 27B.

There is one DAC employed in FIG. 27A (i.e., DAC1), which serves as a signal source. A signal output from the DAC1 is down-converted by a mixer using a local oscillator signal used in a primary receive path, and then a vestigial sideband of the signal output from the mixer is removed by a squarer to obtain a desired intermediate frequency calibration signal.

There are two DACs used in FIG. 27B, wherein the signal produced by DAC1 has a higher bit number than the signal produced by DAC2. For example, the DAC1 is a 10-bit DAC, and the DAC2 is a 1-bit DAC. In addition, there are differences in processing methods for the signals output by the two DACs in FIG. 27B. The signal output by the DAC1 is processed by a mixer, while the signal output by the DAC2 is processed by a frequency divider. Therefore, a clock frequency of theDAC1 is significantly lower than a clock frequency of the DAC2. The clock frequency of the DAC1 may be consistent with a clock frequency of an ADC in the primary receive path (such as 60MHz), while the clock frequency of the DAC2 may be a higher frequency, which may be 1.2 GHz.

A signal output by a frequency divider is processed by the DAC2 to obtain an intermediate frequency calibration signal, wherein the intermediate frequency calibration signal can be switched and output to a signal input terminal of a TIA, a signal input terminal of an HPF, a signal input terminal of a VGA or a signal input terminal of an ADC, thereby implementing calibration for different components or component combinations in an intermediate frequency unit.

A signal transmit link according to an embodiment of the present disclosure includes a primary signal transmission path and a calibration link, wherein the primary signal transmission path may be configured to transmit an electromagnetic wave signal, and the calibration link is integrated in a device including the primary signal transmission path for calibrating the primary signal transmission path, the primary signal transmission path performs a calibration operation based on calibration information obtained by the calibration link, and the calibrated primary signal transmission path transmits the electromagnetic wave signal.

It should be noted that the calibration link described above may be any calibration link described in any embodiment of the present application. The primary signal transmission path and the calibration link are integrated in a same chip or on a same PCD board or a same PCB board to allow real-time detection of the primary signal transmission path.

In addition, if there is a deployment space in an adjacent area to the primary signal transmission path, the calibration link may be preferentially deployed at a distance as close as possible to the primary signal transmission path, so as to reduce an influence of loss and interference in signal transmission on the calibration result.

According to the signal transmit link in the embodiment of the present application, the calibration link is integrated into an integrated circuit including the primary signal transmission path, so that the calibration link can perform a calibration operation on the primary signal transmission path in real time, and the calibration operation of the calibration link will not be changed with the change of the operation environment of the primary signal transmission path, so that the primary signal transmission path can obtain more accurate calibration information, thereby improving a signal processing performance of the primary signal transmission path.

In addition, an integrated circuit according to an embodiment of the present disclosure includes two primary signal transmission paths disposed adjacent to each other and spaced apart, and any of the calibration link described above is disposed between the two primary signal transmission paths, wherein the calibration link is shared by the two primary signal transmission paths.

Furthermore, the integrated circuit may include any one of the above-described signal transceiving links. Alternatively, the integrated circuit may be a millimeter wave radar chip (such as chip or die). In some alternative embodiments, the integrated circuit may be in an Antenna-In-Package (AiP) chip structure, an Antenna-On-Package (AoP) chip structure, or an Antenna-On-Chip (AoC) chip structure.

According to some other embodiments of the present disclosure, an electromagnetic wave device is further provided in the embodiments of the present disclosure. The electromagnetic wave device may include an antenna, as well as the integrated circuit as previously described. The integrated circuit is electrically connected with the antenna, and is used to transmit and receive the electromagnetic wave signal. For example, the electromagnetic wave device may include a carrier, an integrated circuit as described in any of the above embodiments and an antenna, wherein the integrated circuit may be disposed on the carrier, the antenna may be disposed on the carrier (i.e., in this case, the antenna may be an antenna disposed on the PCB board, or in a Radiator on Package (RoP) antenna structure (i.e., by providing a radiation structure (radiator) on the package and surrounding the radiator with balls to form a waveguide structure, the RF signal is transitioned into the waveguide structure through the radiation structure, and then converted from the waveguide structure to an external antenna). Alternatively, the antenna is integrated with the integrated circuit as an integrated device disposed on the carrier (i.e., in this case, the antenna may be an antenna provided in the AiP, the AoP or the AoC structure), wherein the integrated circuit is connected with the antenna (i.e., in this case, the sensor chip or the integrated circuit is not integrated with an antenna, such as a conventional SoC), and is used to transmit and receive the electromagnetic wave signals. The carrier may be a Printed Circuit Board (PCB).

A device is provided in an embodiment of the present disclosure, which may include: an equipment body and an electromagnetic wave device as described above disposed on the equipment body, wherein the electromagnetic wave device is used for object detection and/or communication to provide reference information to an operation of the equipment body.

An electronic device is further provided in an embodiment of the present disclosure, which may be embodied in a form of a general-purpose computing device. Components of the electronic device may include, but are not limited to, at least one processing unit, at least one storage unit, a bus connecting different system components (including the storage unit and the processing unit), a display unit, and the like. Here, the storage unit stores program code that can be executed by the processing unit, so that the processing unit implements the method according to various exemplary embodiments of the present disclosure described in the specification. The storage unit may include a readable medium in a form of a volatile storage unit, such as a Random Access Memory (RAM) and/or a cache storage unit, and may further include a Read-Only Memory (ROM).

The storage unit may further include a program/utility having a set (at least one) of program modules including, but not limited to, an operating system, one or more application programs, other program modules, and program data, which may include implementations of a network environment in each or a combination of these examples.

The bus may represent one or more of several types of bus structures, including a storage unit bus or storage unit controller, a peripheral bus, a graphics acceleration port, a processing unit, or a local bus using any of a variety of bus structures.

The electronic device may further communicate with one or more external devices (e.g., keyboards, pointing devices, Bluetooth devices, etc.), and may also communicate with one or more devices that enable a user to interact with the electronic device, and/or with any device (e.g., a router, modem, etc.) that enables the electronic device to communicate with one or more other computing devices. Such communication may occur through an Input/Output (I/O) interface. Moreover, the electronic device may also communicate with one or more networks, such as a Local Area Network (LAN), a Wide Area Network (WAN), and/or a public network (e.g. the Internet) through a network adapter. The network adapter may communicate with other modules of the electronic device through the bus. It should be understood that, although not shown in the figures, other hardware and/or software modules may be used in conjunction with the electronic device, including, but are not limited to, microcode, device drivers, redundant processing units, external disk drive arrays, RAID systems, tape drives, and data backup storage systems.

For example, the electronic device in the embodiment of the present disclosure may further include an equipment body, and an electromagnetic wave device as set forth in any of the above embodiments disposed on the equipment body, wherein the electromagnetic wave device may be used to implement functions such as target detection and/or wireless communication.

Specifically, based on the above embodiments, in an alternative embodiment of the present disclosure, the electromagnetic wave device may be disposed outside the equipment body or inside the equipment body, while in another alternative embodiment of the present disclosure, the electromagnetic wave device may be partially disposed inside the equipment body and partially disposed outside the equipment body, which is not limited in the embodiments of the present disclosure, and depends as appropriate.

In an alternative embodiment, the above-mentioned equipment body may be components and products applied to fields such as smart cities, smart houses, transportation, smart homes, consumer electronics, security monitoring, industrial automation, in-cabin detection (such as smart cockpits), medical devices and health care. For example, the equipment body can be smart transportation device (such as automobiles, bicycles, motorcycles, ships, subways, trains, etc.), security device (such as cameras), liquid level/flow rate detection device, smart wearable device (such as bracelets, glasses, etc.), smart home device (such as sweeping robots, door locks, televisions, air conditioners, smart lights, etc.), various communication devices (such as mobile phones, tablet computers, etc.), as well as road gates, smart traffic lights, smart signs, traffic cameras and various industrial mechanical arms (or robots), etc. The equipment body can be various instruments for detecting vital signs parameters and various devices equipped with the instruments, such as vital signs characteristics detection in automobile cabins, indoor personnel monitoring, intelligent medical devices, consumer electronic devices, etc.

Further provided in an embodiment of the present disclosure is a non-transitory computer-readable storage medium having computer-readable instructions stored thereon, and when executed by a processor, the instructions cause the processor to perform the signal transmitting method as described above.

From the above description of the implementations, it will be readily understood by those skilled in the art that the example implementations described herein may be implemented by software, or may be implemented by software in combination with necessary hardware. The technical solution according to the embodiments of the present disclosure may be embodied in the form of a software product which may be stored in a non-volatile storage medium (which may be a CD-ROM, a U disk, a mobile hard disk, etc.) or on a network, several instructions are included to cause a computing device (which may be a personal computer, a server, or a network device, etc.) to perform the above-described method according to embodiments of the present disclosure.

For the software product, any combination of one or more readable media may be employed. A readable medium may be a readable signal medium or a readable storage medium. The readable storage medium may be, for example, but not limited to, system, apparatus or device of electrical, magnetic, optical, electromagnetic, infrared, or semiconductor, or a combination of any of the above. More specific examples (non-exhaustive list) of the readable storage medium include electrical connections with one or more wires, portable computer disks, hard disks, Random Access Memories (RAM), Read-only Memories (ROM), Erasable Programmable Read-only Memories (EPROM or flash memories), optical fibers, portable Compact Disk Read-only Memories (CD-ROM), optical storage devices, magnetic storage devices, or any suitable combination of the above.

The computer-readable storage medium may include a data signal propagated in a baseband or as part of a carrier wave, and readable program code is carried in the computer-readable storage medium. Such propagated data signals may take a variety of forms, including, but not limited to, electromagnetic signals, optical signals, or any suitable combination of the foregoing. The readable storage medium may be any readable medium other than a readable storage medium that may transmit, propagate, or transmit a program for use by or in conjunction with an instruction execution system, apparatus, or device. The program code contained on the readable storage medium may be transmitted using any suitable medium, including, but not limited to, wireless, wired, fiber optic cable, RF, etc., or any suitable combination of the foregoing.

Program code for performing the operations in the present disclosure may be written in any combination of one or more programming languages, including object-oriented programming languages, such as Java, C++, and the like, as well as conventional procedural programming languages, such as the "C" language or similar programming languages. The program code may be executed entirely on a user computing device, partially on the user device, as a stand-alone software package, partially on the user computing device and partially on a remote computing device, or entirely on a remote computing device or server. Where a remote computing device is involved, the remote computing device may be connected to the user computing device over any kind of network, including a Local Area Network (LAN) or a Wide Area Network (WAN), or may be connected to an external computing device (e.g., using an Internet service provider to connect over the Internet).

The computer-readable medium carries one or more programs, and when the one or more programs are executed by one of the devices, the aforementioned functions are implemented in the computer-readable medium.

Those skilled in the art can understand that the above-described modules may be distributed in the device according to the description in the embodiments, or may be changed accordingly in one or more apparatuses uniquely different from this embodiment. The modules in the above-described embodiments may be merged into one module, or may be further split into a plurality of sub-modules.

According to an embodiment of the present disclosure, a computer program is proposed, which includes a computer program or instructions that, when executed by a processor, the above-described method is performed. In an alternative embodiment, the above-mentioned integrated circuit may be a millimeter wave radar chip. The types of digital function modules in the integrated circuit can be determined according to the actual requirements. For example, in the millimeter wave radar chip, the receiving baseband digital module can be used for, for example, range-dimensional Doppler transform, velocity-dimensional Doppler transform, constant false alarm detection, direction of arrival detection, point cloud processing, etc., and is used to obtain information such as distance, horizontal angle, pitch angle, velocity, altitude, micro-Doppler motion characteristics, shape, size, surface roughness, and dielectric characteristics of the target.

It should be noted that, the radio device may achieve functions such as target detection and/or communication by transmitting and receiving radio signals to provide detection target information and/or communication information to the equipment body, thereby assisting or even controlling the operation of the equipment body.

For example, when the above-mentioned equipment body is applied to advanced driving assistance system (ADAS), the radio device (such as millimeter wave radar) as on-board sensor can assist ADAS system to achieve application scenarios such as adaptive cruise, autonomous emergency braking (AEB), blind spot detection (BSD), lane change assist (LCA), rear cross traffic alert (RCTA), parking assistance, rear vehicle warning, collision avoidance, pedestrian detection, etc.

The various technical features of the above-mentioned embodiments may be arbitrarily combined, and for the sake of brevity of description, not all possible combinations of the various technical features of the above-described embodiments have been described; however, as long as there is no conflict in these combinations of technical features, they should be considered to be within the scope of the present specification.

The above-described embodiments are intended to express only the preferred embodiments of the present disclosure and the principles of the techniques employed, and the description thereof is more specific and detailed, but should not therefore be construed as limiting the scope of the invention patent. It is possible for those skilled in the art to make various significant changes, readjustments and substitutions without departing from the scope of the present disclosure. Therefore, although the present disclosure has been described in more detail by the above embodiments, the present disclosure is not limited to the above embodiments, but may include more other equivalent embodiments without departing from the idea of the present disclosure, and the scope of protection of the patent of the present disclosure is defined by the scope of the appended claims.

**Claims**

1. A calibration link of a primary signal transmission path, wherein:

    the primary signal transmission path is used for transmitting electromagnetic wave signals; the calibration link is integrated within an integrated circuit that includes the primary signal transmission path; the calibration link is connected at least between the primary signal transmission path and an antenna corresponding to the primary signal transmission path;
    the calibration link is configured to calibrate the primary signal transmission path to obtain calibration information; and
    the primary signal transmission path is configured to perform a calibration operation based on the calibration information obtained from the calibration link, wherein the calibrated primary signal transmission path is configured to transmit electromagnetic wave signals.

2. The calibration link of claim 1, wherein the calibration link is adapted to perform calibration on the primary signal transmission path at least one of prior to departure of the integrated circuit from manufacturing facility and/or during any interval between signal transmission and reception by the integrated circuit, and is further adapted to provide real-time compensation for transmitted information based on calibration data derived from a preceding calibration.

3. The calibration link of claim 1, wherein the integrated circuit incorporates at least two primary signal transmission paths, wherein any calibration link is configured to calibrate at least two of the primary signal transmission paths.

4. The calibration link of claim 1, wherein a signal transmitted by the calibration link is a single-tone signal.

5. The calibration link of any one of claims 1 to 4, wherein:,

the electromagnetic wave signal is a radar signal;
the primary signal transmission path comprises a primary receive path for an echo signal and/or a primary transmit path for a radio frequency signal, the calibration link correspondingly comprises an auxiliary transmit link corresponding to the primary receive path and/or an auxiliary receive link corresponding to the primary transmit path, and the antenna correspondingly comprises a receive antenna corresponding to the primary receive path and/or a transmit antenna corresponding to the primary transmit path;
the auxiliary receive link is interconnected between the primary transmit path and a corresponding transmit antenna, and is configured to calibrate a radio frequency signal emitted by the primary transmit path, and
the primary receive path comprises a radio frequency unit and an intermediate frequency unit sequentially connected with the receive antenna, the auxiliary transmit link comprises at least one of an intermediate frequency auxiliary transmit link corresponding to the intermediate frequency unit and a radio frequency (RF) auxiliary transmit link corresponding to the radio frequency unit, wherein the intermediate frequency auxiliary transmit link is connected to an output terminal of the intermediate frequency signal of the primary receive path, and is configured to calibrate an intermediate frequency signal obtained by down-conversion an echo signal received by the primary receive path; and the RF auxiliary transmit link is connected between the primary receive path and a corresponding receive antenna, and is configured to calibrate the echo signal received by the primary receive path.

6. The calibration link of claim 5, wherein the auxiliary receive link comprises:

a first mixer, arranged to mix a received signal with a local oscillator signal employed in reception operations;
a first power amplifier, configured to amplify a signal outputted by the first mixer;
a first filtering unit, configured to perform filtering processing on the received signal to yield a filtered signal; and
a first real digital-to-analog converter (DAC), configured to convert a digital filtered signal to an analog filtered signal.

7. The calibration link of claim 6, wherein the auxiliary receive link further comprises:
a first adder, coupled to the first real DAC, and is configured to compensate the signal output by the first real DAC in accordance with a leakage signal derived from the local oscillator utilized by the first mixer.

8. The calibration link of any one of claims 5 to 7, wherein:

the calibration link further comprises a calibration transmit link corresponding to the auxiliary receive link; and
the calibration transmit link is configured to perform a calibration operation on the auxiliary receive link;
the auxiliary transmit link is configured to perform a calibration operation based on calibration information obtained by a calibrating receive link, wherein the auxiliary receive link post-calibration is configured is adapted to calibrate the primary transmit path.

9. The calibration link of claim 8, wherein the calibration transmit link comprises:

a first signal generator, configured to output a digital original signal;
a second real DAC, configured to convert the digital original signal to an analog original signal;
a second filtering unit, configured to perform filtering processing on the original signal to yield a filtered signal;
a second power amplifier, configured to amplify the filtered signal to produce an amplified signal; and
a second mixer, configured to mix the amplified signal with a local oscillator signal employed in transmission operations.

10. The calibration link of claim 9, wherein the calibration transmit link further comprises at least one of a second adder and a band pass filter, wherein:

the second adder is interconnected between the first signal generator and the second real DAC, and is configured to compensate the signal output by the first signal generator based on a leakage signal derived from the local oscillator utilized by the second mixer; and

the band-pass filter is coupled to the second mixer, and is configured to filter a signal output by the second mixer and convey the filtered signal to a calibration unit.

11. The calibration link of claim 5, wherein the intermediate frequency auxiliary transmit link comprises:

a first signal source and a third real DAC, wherein the first signal source is configured to output a digital intermediate frequency calibration signal, and the third real DAC is configured to convert the digital intermediate frequency calibration signal to an analog intermediate frequency calibration signal; or

the intermediate frequency auxiliary transmit link comprises a fourth DAC, a third mixer and a first squarer, wherein the fourth real DAC is configured to convert a preset digital signal to an analog signal, the third mixer is configured to mix the signal output from the fourth real DAC with a local oscillator signal to yield a mixed signal, and the first squarer is configured to perform square processing on the mixed signal to yield the intermediate frequency calibration signal.

12. The calibration link of claim 11, wherein:

the first signal source comprises a second signal generator and a digital phase shift module, wherein the second signal generator is configured to generate an initial signal, and the digital phase shift module is configured to perform frequency shift and/or phase shifting on the initial signal utilizing digital quadrature modulation.

13. The calibration link of claim 5, wherein the RF auxiliary transmit link is connected to an input terminal of the intermediate frequency unit;

upon calibration of the intermediate frequency unit, the RF auxiliary transmit link is subsequently calibrated utilizing the calibrated intermediate frequency unit, and the radio frequency unit is calibrated employing the calibrated RF auxiliary transmit link.

14. The calibration link of claim 5 or 13, wherein the radio frequency auxiliary transmit link comprises:

a second signal source, configured to output an original signal;

a third filtering unit, configured to perform filtering processing on the original signal to obtain a filtered signal;

a third power amplifier, configured to amplify the filtered signal to obtain an amplified signal; and

a fourth mixer, configured to mix the amplified signal with a local oscillator signal to obtain a desired signal.

15. The calibration link of claim 14, wherein the RF auxiliary transmit link comprises at least one of a quadrature compensation unit, a second squarer and a third adder, wherein:

the quadrature compensation unit has a terminal connected to the second signal source and another terminal connected to the third filtering unit, and is configured to compensate for quadrature imbalance of a received original signal when the original signal output by the second signal source is a quadrature signal;

the second squarer is connected to a signal input terminal of the intermediate frequency (IF) unit, and is configured to process the signal output by the fourth mixer, and to output the processed signal to the calibrated IF unit; and

the third adder has a terminal connected with the second signal source and another terminal connected to the third filtering unit, and is configured to compensate the signal output from the second signal source according to a leakage component of the local oscillator (LO) signal used by the fourth mixer.

16. A signal transmission link, comprising:

a primary signal transmission path, configured to convey electromagnetic (EM) wave signals, and

an integral calibration subsystem, embedded within a device encompassing the primary signal transmission path, for the purpose of calibrating the primary signal transmission path,

wherein the primary signal transmission path is adapted to execute calibration procedures based on calibration data derived from the integral calibration subsystem, subsequently facilitating the transmission of calibrated electromagnetic(EM) wave signals.

17. The signal transmission link of claim 16, wherein:

the calibration link is the calibration link of any one of claims 1 to 15.

18. The signal transmission link of claim 16 or 17, wherein the primary signal transmission path and the calibration link are integrated onto the same semiconductor die or chip, or mounted on the same Power Control Daughterboard (PCD) board or a same Printed circuit board (PCB) board.

19. An integrated circuit, wherein the integrated circuit is provided with at least two signal primary transmission paths and a calibration of any one of claims 1 to 15, interposed between two adjacent primary signal transmission paths, with the calibration link being common to both primary signal transmission paths.

20. An electromagnetic (EM) wave device, comprising:

    a carrier;
    the integrated circuit (IC) according to claim 19, which is affixed to the carrier; and
    an antenna, which is affixed to the carrier or integrated with the IC as a unified device provided on the carrier; the antenna comprises a transmitter antenna and a receiver antenna,
    wherein the IC is linked to the antenna for the transmission and/or reception of EM wave signals.

21. A user terminal equipment, comprising:

    an equipment body; and
    an electromagnetic (EM) wave device of claim 20, which is disposed on the equipment body,
    wherein the electromagnetic wave device is employed for target detection and/or wireless communication to furnish reference information for operation of the equipment body.

# EP 4 531 310 A1

FIG. 1A

FIG. 1B

FIG. 2

FIG. 3

FIG. 4

TX digital phase shifter architecture

TX LO

| Baseband | → | TX DDFS | → | TX compens-ation unit | → | IQ DAC | → | LPF | → | IQ modulator | → | PA | → |

IQ modulator

FIG. 5

xMHz sine wave

TX digital phase shifter architecture

TX LO  zGHz sine wave

| Baseband | → | TX DDFS | → | TX LO imbalance compens-ation unit | → | TX LO leakage compens-ation unit | → | TX HD3 compens-ation unit | → | IQ DAC | → | LPF | → | IQ modulator | → | PA | → |

IQ modulator

FIG. 6

Calibration link

Transmit unit

Primary transmit path

FIG. 7

Signal transmit link

201          202          207                    203                    206

| Baseband | → | IQ DAC | → | LPF | → | IQ Modulator 204 | → | PA 205 | → |

TX_LO

IQ Modulator

Signal receive link

305          304          308          307      RX_LO  303      306          301

| Baseband | ← | Real ADC | ← | HPF | ← | LPF | ← | 303 | ← | LNA | ← |

302

FIG. 8

## Signal transmit link

201 — Baseband → 202 — IQ DAC → 207 — LPF → 204 — IQ Modulator (TX_LO, 203) → 205 — PA → 206

## Signal receive link

305 — Baseband ← 304 — IQ ADC ← 308 — HPF ← 307 — LPF (RX_LO 303, 302) ← IQ De-Modulator ← 306 — LNA ← 301

FIG. 9

Transmitter

xMHz sine wave → Baseband → TX DDFS → TX IQ imbalance compensation unit → IQ DAC → LPF → IQ modulator (TX LO z GHz sine wave) → PA

Receiver

TX IQ imbalance calibration ← Real ADC ← HPF ← LPF ← ← IQ (RX LO) ← LNA

FIG. 10

Transmitter

xMHz sine wave → Baseband → TX DDFS → TX IQ imbalance compensation /HD3 compensation unit → IQ DAC → LPF → IQ modulator (TX LO z GHz sine wave) → PA

Receiver

TX IQ imbalance calibration /HD3 calibration ← IQ ADC ← HPF ← LPF ← ← IQ demodulator (RX LO) ← LNA

FIG. 11

## Transmitter

xMHz
sine wave

Baseband → TX DDFS → TX IQ imbalance compens-ation unit → IQ DAC → LPF → IQ modulator → PA

TX LO z GHz sine wave

IQ modulator

BIST LO  y MHz sine wave

TX LO → 0/90deg → IQ modulator

## Receiver

RX LO
(z GHz-yMHz) sine wave

TX IQ imbalance calibration ← IQ ADC ← HPF ← LPF ← ← IQ demodulator ← LNA

IQ demodulator

FIG. 12

## Transmitter

TX LO
z GHz sine wave

xMHz
sine wave

Baseband → TX DDFS → TX IQ imbalance compens-ation unit → IQ DAC → LPF → IQ modulator → PA

IQ modulator

y MHz sine wave

BIST LO

0/90deg → IQ demodulator

IQ demodulator

## Receiver

RX LO
(z GHz-yMHz) sine wave

TX IQ imbalance calibration ← IQ ADC ← HPF ← LPF ← ← IQ demodulator ← LNA

IQ demodulator

FIG. 13

FIG. 14

FIG. 15

| Voltage-to-current converter | Current switch | Current-to-voltage converter |

FIG. 16

Compensation unit

Acquisition circuit

Cancellation signal generator

FIG. 17

Digital circuit    Analog circuit

Baseband

HD3 Pre-compensation

N bit I data

N bit Q data

IQ DAC

BBIP
BBIN
BBOP
BBON

BBIP
BBIN
BBOP
BBON

V/I Converter

Current Switch

I/V Converter

PA

HD3

LOIP LOIN LOOP LOON

Mixing coupler

LO_P LO_N

LO

Compensation coefficient

IQ ADC

HD3 Model

()*    ()^3

FIG. 18

Digital circuit    Analog circuit

BB

3BB

5BB

×

×

Σ

N bit I data

N bit Q data

IQ DAC

BBIP
BBIN
BBOP
BBON

BBIP
BBIN
BBOP
BBON

V/I converter

Current switch

I/V converter

PA

HD3

LOIP LOIN LOOP LOON

Mixing coupler

LO_P LO_N

LO

HD3 calibration

Compensation coefficient

IQ ADC

HD3 calibration

FIG. 19

IQ imbalance compensation unit

Harmonic distortion compensation unit

LO leakage compensation unit

Baseband processor

IQ DAC

IQ modulator

V/I converter

Current switch

I/V converter

PA

TX calibration module

IQ ADC

MUX

IQ demodulator

FIG. 20

Calibration link

Signal transmit primary path

FIG. 21A

| Signal transmit primary path |
| Calibration link |
| Signal transmit primary path |

FIG. 21B

| Primary transmit path |
| Auxiliary receive link |
| Calibration transmit link |
| Primary transmit path |
| Primary transmit path |
| Auxiliary receive link |
| Calibration transmit link |
| Primary transmit path |

FIG. 22A

| Radio frequency unit | Intermediate frequency unit |
| Intermediate frequency auxiliary transmit link |
| Radio frequency unit | Intermediate frequency unit |
| Radio frequency unit | Intermediate frequency unit |
| Intermediate frequency auxiliary transmit link |
| Radio frequency unit | Intermediate frequency unit |

FIG. 22B

FIG. 22C

FIG. 23A

FIG. 23B

**Calibration auxiliary unit**

First signal generator

First real digital-to-analog converter

Second filtering unit

Second power amplifier

Second mixer

FIG. 23C

**Calibration transmit link**

First signal generator

Second adder

Second real digital-to-analog converter

Second filtering unit

Second power amplifier

Second mixer

Band pass filter

FIG. 23D

FIG. 24

FIG. 25A

FIG. 25B

FIG. 25C

Radio frequency
auxiliary transmit link

Second signal source

Quadrature
compensation unit

Adder

Third filtering unit

Third power amplifier

Fourth mixer

Second squarer

FIG. 25D

Intermediate frequency auxiliary transmit link

Frequency
divider

Real
ADC

RX LO leakage

BB
processing
module

Primary receive path

RX LO
RX LO leakage

Real
ADC

HPF

LPF

LNA

PD

Radio frequency auxiliary transmit link

TX
DDFS

IQ imbalance
compensation

IQ
DAC

LPF

X^2

TX LO leakage

TX LO leakage

TX LO

FIG. 26

DAC1

X^2 ⊗ ∿ 5MHz sine wave

LO

LNA ⊗ TIA HPF ADC

Baseband processing module

FIG. 27A

DAC1

X^2 ⊗ ∿ 5MHz sine wave

LO

LNA ⊗ TIA HPF VGA

ADC

SDM Decimation filter

Baseband processing module

Intermediate frequency signal

DAC2 ∿ Frequency divider

FIG. 27B

**EP 4 531 310 A1**

## INTERNATIONAL SEARCH REPORT

International application No.

**PCT/CN2024/099420**

### A. CLASSIFICATION OF SUBJECT MATTER

H04B 17/21(2015.01)i

According to International Patent Classification (IPC) or to both national classification and IPC

### B. FIELDS SEARCHED

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNTXT; CNKI; VEN; ENTXTC; 3GPP: 校准, 校正, 发射, 接收, 收发, 链路, 射频, 中频, 集成电路, 芯片, calibrat+, transmit +, receiv+, transceiver, link, RF, intermediate frequency, integrated circuit

### C. DOCUMENTS CONSIDERED TO BE RELEVANT

| Category* | Citation of document, with indication, where appropriate, of the relevant passages | Relevant to claim No. |
|---|---|---|
| X | CN 111431556 A (SHENZHEN SOUTH SILICON VALLEY SEMICONDUCTOR CO., LTD.) 17 July 2020 (2020-07-17) description, paragraphs 19-38 | 1-4, 16-21 |
| A | CN 111934791 A (NANJING YINGRUICHUANG ELECTRONIC TECHNOLOGY CO., LTD.) 13 November 2020 (2020-11-13) entire document | 1-21 |
| A | US 2014364067 A1 (MSTAR SEMICONDUCTOR INC.) 11 December 2014 (2014-12-11) entire document | 1-21 |
| A | US 2020341112 A1 (INFINEON TECHNOLOGIES AG.) 29 October 2020 (2020-10-29) entire document | 1-21 |
| A | WO 2021134617 A1 (HUAWEI TECHNOLOGIES CO., LTD.) 08 July 2021 (2021-07-08) entire document | 1-21 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 September 2024** | **13 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/099420**

| Patent document cited in search report | | | Publication date (day/month/year) | Patent family member(s) | | | Publication date (day/month/year) |
|---|---|---|---|---|---|---|---|
| CN | 111431556 | A | 17 July 2020 | CN | 111431556 | B | 09 October 2020 |
| CN | 111934791 | A | 13 November 2020 | CN | 111934791 | B | 13 January 2023 |
| US | 2014364067 | A1 | 11 December 2014 | TW | 201448490 | A | 16 December 2014 |
| | | | | TWI | 504172 | B | 11 October 2015 |
| | | | | US | 9509419 | B2 | 29 November 2016 |
| US | 2020341112 | A1 | 29 October 2020 | DE | 102019110525 | A1 | 29 October 2020 |
| | | | | DE | 102019110525 | B4 | 29 July 2021 |
| | | | | US | 11567170 | B2 | 31 January 2023 |
| | | | | CN | 111830472 | B | 27 October 2020 |
| WO | 2021134617 | A1 | 08 July 2021 | CN | 113412581 | A | 17 September 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310702586

- CN 202311873028